(19) Europäisches Patentamt
European Patent Office
Office européen des brevets

(11) **EP 3 745 584 B1**

(12) **EUROPÄISCHE PATENTSCHRIFT**

(45) Veröffentlichungstag und Bekanntmachung des Hinweises auf die Patenterteilung:
**09.02.2022 Patentblatt 2022/06**

(21) Anmeldenummer: **19216080.2**

(22) Anmeldetag: **13.12.2019**

(51) Internationale Patentklassifikation (IPC):
***H02N 2/18*** *(2006.01)*

(52) Gemeinsame Patentklassifikation (CPC):
**H02N 2/188**

(54) **KINETISCHER ENERGY HARVESTER MIT EINSTELLBARER EIGENFREQUENZ**

KINETIC ENERGY HARVESTER WITH ADJUSTABLE NATURAL FREQUENCY

SYSTÈME DE RÉCOLTE D'ÉNERGIE CINÉTIQUE À FRÉQUENCE PROPRE RÉGLABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.05.2019 DE 102019114171**

(43) Veröffentlichungstag der Anmeldung:
**02.12.2020 Patentblatt 2020/49**

(73) Patentinhaber: **Hahn-Schickard-Gesellschaft für angewandte Forschung e.V.
78052 Villingen-Schwenningen (DE)**

(72) Erfinder: **Esch, Jonas
78050 Villingen-Schwenningen (DE)**

(74) Vertreter: **Hertin und Partner
Rechts- und Patentanwälte PartG mbB
Kurfürstendamm 54/55
10707 Berlin (DE)**

(56) Entgegenhaltungen:
**WO-A1-2016/182521      US-A1- 2015 145 376
US-A1- 2016 197 261**

EP 3 745 584 B1

**Beschreibung**

Die Erfindung betrifft bevorzugt einen Energiesammler zur Gewinnung elektrischer Energie aus mechanischen Vibrationen, umfassend ein Gehäuse, ein Koppelelement, eine schwingfähige Struktur umfassend mindestens zwei Federelemente und eine Schwingmasse sowie einen elektromechanischen Wandler. Der elektromechanische Wandler und die schwingfähige Struktur sind konfiguriert für eine Erzeugung elektrischer Energie bei einer Schwingung der schwingfähigen Struktur. Der Energiesammler ist durch ein Klemmelement und einen Aktor gekennzeichnet, welche konfiguriert sind für eine schaltbare Klemmverbindung zwischen jedem der mindestens zwei Federelemente der schwingfähigen Struktur und dem Koppelelement. Durch die schaltbare Klemmverbindung zwischen den Federelementen und dem Koppelelement lässt sich insbesondere eine Eigenfrequenz der schwingfähigen Struktur einstellen, welche von den Federkonstanten der Federelemente abhängt. Die Erfindung betrifft zudem Verfahren zur Einstellung einer Eigenfrequenz mittels des Energiesammlers.

Hintergrund und Stand der Technik

Kinetische Energy Harvester bzw. Energiesammler können aufgrund einer mechanischen Vibration elektrische Energie erzeugen und eignen sich daher als Energieversorger für energieautarke Kontroll- und Sensorelemente in einer technischen Umgebung, in der mechanische Vibrationen immanent sind. Beispiele sind Maschinen Motoren, Getriebe, Pumpen usw. Typische mechanische Vibrationen spielen sich dabei im Bereich zwischen 10 und 100 Hertz (Hz) ab, jedoch sind auch breitere Frequenzspektren üblich. Es können auch Frequenzen im Bereich von einigen kHz auftreten

Ein großes Problem ist eine fehlende Anpassungsfähigkeit bekannter Energy Harvester auf sich ändernde Frequenzen mechanischer Vibrationen. Stimmen die Eigenfrequenz eines Harvesters und die Frequenz der Vibrationen nicht hinreichend überein, kann nur wenig elektrische Energie erzeugt werden. Dies ist insbesondere im Hinblick auf den regelmäßig hohen Energieverbrauch der zu versorgenden Sensoren problematisch. Eine gleichzeitige Anforderung an den Harvester ist jedoch ein möglichst kompakter und technisch einfacher Aufbau.

Im Stand der Technik sind verschiedene Tuningmechanismen für die Resonanzfrequenz von Harvestern bekannt, um die Energieausbeute zu optimieren. Bekannte Tuningmechanismen können beispielsweise unterschieden werden zwischen manuellen Tuningmechanismen, passivem Self-tuning und aktivem Self-tuning. Bei dem passiven Self-tuning passt sich das System ohne zusätzliche elektrische Energie an die Anregungsfrequenz an. Bei einem aktiven Self-tuning sorgen Aktuatoren für eine Frequenzanpassung. Das aktive Self-tuning kann zudem unterschieden werden in einen *passive mode,* bei dem Energie nur für das Einstellen benötigt wird, und einem *active mode,* welcher dauerhaft Energie zum Halten der Einstellung benötigt.

Die Methoden des Tunings reichen von mechanischen und/oder geometrischen Anpassungen bis hin zu dem Einleiten von axialen oder radialen Kräften zum Beispiel über magnetische oder piezoelektrische Krafteinwirkungen. Dabei spielen auch die Methoden der Energiegewinnung eine Rolle, welche induktiv, kapazitiv oder piezoelektrisch sein können.

Mechanische Anpassungen des Standes der Technik funktionieren z. B. durch Anpassungen der Resonanzfrequenz durch Verschieben kleiner Massen oder durch die Änderung der Länge oder Steifigkeit einer Schwingstruktur. Mechanisches Tuning ist robust und hat ein breites tunebares Frequenzspektrum, benötigt jedoch aufwendige mechanische Strukturen und ist schwierig in Form eines Autotunings zu implementieren.

Magnetisches Tuning kann durch Variation der auf eine Schwingstruktur einwirkenden magnetischen Kraft erfolgen. Magnetisches Tuning ist verhältnismäßig einfach umzusetzen, die verwandten mechanischen Strukturen sind jedoch fehleranfällig und erreichen nur geringe Frequenzbandbreiten. Zudem erschwert die auftretende Hysterese eine präzise Steuerung. Magneten sind außerdem teuer.

Die Schwingeigenschaften einer Struktur können außerdem durch Steuerung einer an entsprechenden piezoelektrischen Elementen anliegenden Spannung verändert werden. Piezoelektrisches Tuning kann besonders kompakt und ohne zusätzliche mechanische Elemente realisiert werden. Jedoch ist ein Betrieb in der Regel nur im aktiven Modus unter ständigem Energieverbrauch möglich. Es werden hohe Spannungen benötigt und die Lebensdauer ist limitiert.

Daher besteht ein großer Bedarf an alternativen und verbesserten Tuningmechanismen für Vibrationsenergie-Harvester. Ein Beispiel aus dem Stand der Technik findet sich in Patentschrift US2016/0197261.

Aufgabe der Erfindung

Aufgabe der Erfindung ist es, einen Energiesammler sowie ein Verfahren zur Einstellung einer Eigenfrequenz eines Energiesammlers ohne die Nachteile des Standes der Technik bereitzustellen. Insbesondere war es eine Aufgabe der Erfindung, einen Energiesammler zur Gewinnung elektrischer Energie aus mechanischen Vibrationen bereitzustellen, welcher mit einfachen, kostengünstigen und robusten mechanischen Mitteln breitbandig, fein aufgelöst und einfach einstellbar ist und dabei einen geringen eigenen Energiekonsum aufweist.

Zusammenfassung der Erfindung

Gelöst wird die Aufgabe durch die Merkmale der unabhängigen Ansprüche. Vorteilhafte Ausgestaltungen der Erfindung sind in den abhängigen Ansprüchen beschrieben.

In einem ersten Aspekt betrifft die Erfindung einen Energiesammler zur Gewinnung elektrischer Energie aus mechanischen Vibrationen, umfassend:

a. ein Gehäuse
b. ein Koppelelement, welches kraft- und/oder formschlüssig mit dem Gehäuse verbunden ist, sodass sich mechanische Vibrationen des Gehäuses auf das Koppelement übertragen;
c. eine schwingfähige Struktur umfassend mindestens zwei Federelemente und eine Schwingmasse,
d. einen elektromechanischen Wandler, wobei der elektromechanische Wandler und die schwingfähige Struktur konfiguriert sind für eine Erzeugung elektrischer Energie bei einer Schwingung der schwingfähigen Struktur,

wobei der Energiesammler ein Klemmelement und einen Aktor umfasst, welche konfiguriert sind für eine schaltbare Klemmverbindung zwischen jedem der mindestens zwei Federelemente der schwingfähigen Struktur und dem Koppelelement.

Der Energiesammler, liegt bevorzugt an einer vibrierenden mechanischen Vorrichtung, z. B. einem Motor, vor, dessen Vibrationen somit an das Gehäuse und an das daran befestiget Koppelement übertragen werden. Diese überträgt die Vibration an die schwingfähige Struktur, welche eine federnd gelagerte Schwingmasse aufweist. Aus der Schwingung dieser Struktur kann mit einem elektromechanischen Wandler elektrische Energie erzeugt werden. Unter dem Begriff der "mechanischen Vibrationen" sollen sämtliche mechanischen Schwingungen verstanden werden, welche zur beschriebenen Anregung und Erzeugung von elektrischer Energie geeignet sind. Hierbei kann es sich bevorzugt um periodische Schwingungen handeln, welche insbesondere bei vibrierenden Geräten auftreten, aber auch einzelne oder mehrere (ggf. periodisch erfolgende) Stöße können gemeint sein.

Damit die Eigenfrequenz dieser schwingfähigen Struktur auf die Vibrationsfrequenz des Erregers bestmöglich angepasst werden kann, können einzelne Federelemente der Federlagerung separat durch aktorgesteuerte Klemmelemente mit dem Koppelelement verbunden oder vom Koppelement getrennt werden. Indem die schwingende Verbindung zwischen Schwingmasse und Koppelement durch die Anzahl der geklemmten Federelemente variiert werden kann, wird die Eigenfrequenz der schwingfähigen Struktur angepasst. Je genauer die Anpassung an die Erregerfrequenz erfolgt, desto größer ist die Resonanzüberhöhung und umso mehr elektrische Energie kann der elektromechanische Wandler aus der Schwingung der schwingfähigen Struktur erzeugen. Werden eine Vielzahl von Federelementen verwendet, wobei jedes individuell geklemmt werden kann, ergeben sich aufgrund der Vielzahl möglicher Kombinationen geklemmter Elemente ein gleichzeitig breit anpassbares sowie fein aufgelöstes Spektrum an einstellbaren Eigenfrequenzen.

Die Resonanzfrequenz ist vorzugsweise eine Frequenz, bei der die Amplitude der schwingungsfähigen Struktur größer ist als bei Anregung durch benachbarte Frequenzen. Im vorliegenden Text werden die Begriffe Resonanzfrequenz und Eigenfrequenz vorzugsweise synonym verwendet. Der Fachmann weiß zwar, dass der Begriff Eigenfrequenz häufig bei von sich aus schwingenden Systemen verwendet wird, während der Begriff Resonanzfrequenz häufig bei extern angeregten Schwingungen verwendet wird. Jedoch weiß der Fachmann ebenso, dass vorzugsweise physikalische Zusammenhänge zwischen beiden Größen bestehen und insbesondere bei schwach gedämpften schwingenden Systemen Resonanz- und Eigenfrequenz im Wesentlichen übereinstimmen.

Das Gehäuse ist bevorzugt ein robustes Element, welches die Außenhülle des Energiesammlers darstellt und eine Schutzfunktion für die Mechanik und Elektrik im Inneren des Energiesammlers hat. Daher ist es bevorzugt, dass das Gehäuse im Wesentlichen eine rundherum geschlossene Außenhülle darstellt, welche mechanisch robust ist. Ein Gehäuse kann z. B. ein Metall oder ein Plastik umfassen.

Das Gehäuse bietet bevorzugt eine Möglichkeit zur Anbringung an die vibrierende mechanische Vorrichtung, z. B. in Form einer entsprechend angepassten Fläche, welche Vorsehungen für Verbindungselement mit der vibrierenden Vorrichtung, wie z. B. Löcher für Schrauben aufweisen kann. Es kann auch beispielsweise bereichsweise magnetisch sein, um auf einer Metalloberfläche ohne zusätzliche Verbindungselemente anbringbar zu sein. Das Gehäuse ist vorzugsweise kompakt, jedoch ausreichend groß dimensioniert, um eine Aufnahme und Schwingung der schwingfähigen Struktur zu ermöglichen. Ein Gehäuse kann vorzugsweise ein Chassis umfassen, welche insbesondere eine besonders stabile Basisplatte umfasst, auf der die wesentlichen Komponenten des Energiesammlers installiert werden können.

Das Koppelelement sollte bevorzugt zum einen fest mit dem Gehäuse verbunden sein und andererseits eine Schwingung der mit ihr über die Klemmelemente verbundenen schwingfähigen Struktur ermöglichen. Das Koppelement sollte zudem ausreichend mechanisch stabil sein, um eine Aufhängung der Schwingfähigen Struktur zu ermöglichen. Vorzugsweise wird durch das Koppelelement ein ausreichender Abstand der schwingfähigen Struktur zum Gehäuse gewährleistet, damit diese frei schwingen kann. Das Koppelement stellt vorzugsweise eine mechanisch stabile Verbindung zwischen Klemmelement und Gehäuse dar und schwingt insbesondere im Wesentlichen nicht relativ zum Gehäuse.

Die schwingfähige Struktur umfasst vorzugsweise mindestens zwei Federelemente und eine Schwingmasse. Die Schwingmasse ist vorzugsweise ein massives Element, welches an den Federelementen aufgehängt und ansonsten freistehend ist, so dass eine Schwingung der Schwingmasse ermöglicht wird. Bei einer Schwingung wird vorzugsweise die Schwingmasse aus ihrer Ruheposition ausgelenkt, wobei die Federelemente eine Kraft auf die Schwingmasse in Richtung Ruheposition ausüben. Die Kraft wird immer größer, umso stärker die Auslenkung ist.

Vorzugsweise sind Federelemente und Schwingmasse so gekoppelt, dass die Schwingmasse das Element der schwingfähigen Struktur ist, welches bei einer Schwingung mit der größten Amplitude schwingt. Die Federelemente bewirken bevorzugt an einem Punkt der maximalen Auslenkung einer Schwingung der Schwingmasse eine Kraft in entgegengesetzter Richtung, so dass die Schwingmassen erneut beschleunigt wird, bis der nächste Umkehrpunkt der Schwingung erreicht wird und die Bewegungsrichtung sich aufgrund der Federkraft erneut umkehrt. Als Schwingung wird bevorzugt eine wiederholte zeitliche Schwankung von der räumlichen Auslenkung der Struktur bzw. der Schwingmasse verstanden. Insbesondere ist die Schwingung im Wesentlichen oder zumindest teilweise periodisch, das bedeutet vor allem zeitlich regelmäßig.

Die Wiederholungsrate einer Schwingung hängt insbesondere ab zum einen von der Dämpfung der Schwingung und zum anderen von der Anregung durch eine externe Kraft, bspw. aufgrund einer Vibration der vibrierenden Vorrichtung. Eine Dämpfung des Systems kann beispielsweise durch Reibungsverluste auftreten. Für den Energiesammler überwiegt im Betrieb in der Regel jedoch eine elektrische Dämpfung, aufgrund der Wandlung von mechanischer in elektrischer Energie.

Während der Schwingung können sich auch die Schwingungseigenschaften der schwingfähigen Struktur ändern, insbesondere, wenn sich die Schwingungseigenschaften der externen Vibration ändern. Die Schwingungseigenschaften umfassen vor allem die Schwingungsamplitude, die Schwingungsfrequenz, die Eigen- bzw. Resonanzfrequenz und/oder die Phase, z. B. im Vergleich zur anregenden externen Vibration oder im zeitlichen Verlauf.

Ein Federelement ist vorzugsweise ein ebenes Element, z. B. aus Metall, welches in mindestens einer Vorzugsrichtung elastische Eigenschaften aufweist, die insbesondere durch eine Federkonstante beschrieben werden können. Bevorzugt weisen die mindestens zwei klemmbaren Federelemente unterschiedliche Federkonstanten auf.

Der elektromechanische Wandler wandelt die mechanische Energie der Schwingung vorzugsweise in elektrische Energie um. Der elektromechanische Wandler kann dabei sowohl schwingende Elemente als auch fest mit dem Gehäuse verbundene Elemente umfassen. Vorzugsweise wird durch den Wandler die mechanische Energie der Schwingmasse verwendet, weil diese vorzugsweise mit der größten Amplitude schwingt. Beispielsweise kann die Schwingmasse Magneten umfassen, welche entlang einer starr mit dem Gehäuse verbundenen Induktionsspule schwingen und so eine elektrische Spannung in der Spule induzieren. Der elektromechanische Wandler kann jedoch auch im Wesentlichen von piezoelektrischen Federelementen gebildet werden, wobei eine elektrische Spannung bei einer Schwingung aufgrund des piezoelektrischen Effekts generiert wird. Ebenso sind kapazitiven elektromechanischen Wandler denkbar, welche beispielsweise einen Kondensator mit mindestens zwei zueinander beweglichen Elektroden umfassen.

Der Energiesammler umfasst ein Klemmelement und einen Aktor. Diese sind im Zusammenspiel vorzugsweise konfiguriert für eine schaltbare Klemmverbindung zwischen jedem der mindestens zwei Federelemente der schwingfähigen Struktur und dem Koppelelement. Vorzugsweise sind mindestens ein Klemmelement und ein Aktor umfasst. Insbesondere sind zu jedem vorhandenen Federelement ein Klemmelement und ein zugehöriger Aktor umfasst. Es soll vor allem erreicht werden, dass im Wesentlichen alle umfassten Federelemente individuell geklemmt werden können.

Dabei kann ein Federelement z. B. geklemmt werden, indem es zwischen einer oberen Fläche des Klemmelements und eine unteren Fläche des Klemmelements eingeklemmt wird. Durch eine Relativbewegung der oberen Fläche und der unteren Fläche zueinander kann das Federelement eingespannt (geklemmt) werden oder aber die Klemmung gelöst werden. Diese Relativbewegung wird vorzugsweise durch den Aktor durchgeführt, z. B. einen kleinen Elektromotor oder ein sonstiges elektromagnetisches Element, welches durch eine elektrische Ansteuerung bewegt werden kann. Schaltbar bedeutet vorzugsweise, dass die Klemmung durch die elektrische Ansteuerung gesteuert werden kann.

Ein Klemmelement kann vorzugsweise ähnlich einer Schraubklemme funktionieren, nur das bevorzugt anstelle eines Kabelendes ein Ende bzw. eine Seite eines Federelements eingeklemmt wird. Durch das Klemmelement wird die federartige Schwingung des geklemmten Federelements vorzugsweise ermöglicht, indem die externe Schwingung auf das Federelement maximal übertragen wird, da eine mechanisch stabile Verbindung zwischen Federelement und Koppelement durch das Klemmelement besteht. Vorzugsweise bildet sich aufgrund der Trägheit der Schwingmasse sodann eine relative Schwingung zwischen Gehäuse/Koppelement und Schwingmasse aus, welche insbesondere durch die geklemmten Federelemente übertragen wird.

Die nicht geklemmten Federelemente sind dabei vorzugsweise weiterhin mit der Schwingmasse verbunden, so dass ihre grundsätzliche Anordnung innerhalb der Vorrichtung auch im nicht geklemmten Zustand erhalten bleibt.

Eine Variation der Schwingung durch individuell klemmbare Federelemente soll beispielhaft für zwei Federelemente erläutert werden, welche auf einer Seite individuell geklemmt werden können und auf der anderen Seite mit der Schwingmasse verbunden sind. Vorzugsweise sollte stets mindestens ein Federelement geklemmt vorliegen. So ergeben sich drei verschiedene Möglichkeiten der Klemmung: entweder ist das eine Federelement geklemmt, das andere Federelement geklemmt oder beide Federelemente sind gemeinsam geklemmt. Haben die Federelemente unterschiedliche Federkonstanten, ergeben sich jeweils eine schwingfähige Struktur mit einer unterschiedlichen Schwingungseigenschaften, z. B. durch eine unterschiedliche resultierende Federkonstante. So kann die Eigenfrequenz der schwingfähigen Struktur innerhalb eines Frequenzbereichs eingestellt werden, indem die Klemmung zwischen diesen drei Möglichkeiten variiert wird.

Bei einer Anzahl von m individuell klemmbaren Federelementen ergibt sich somit $\sum_{k=1}^{m} \binom{m}{k} = 2^m - 1$ verschiedene Klemmmöglichkeiten. Diese Formel ergibt sich vorzugsweise aus der in der Kombinatorik bekannten sogenannten Kombination ohne Wiederholung. Diese beschreibt insbesondere eine Auswahl von Elementen, bei der jedes Element nur einmal ausgewählt wird und es auf eine Reihenfolge der Auswahl beim Abzählen der Kombinationsmöglichkeit nicht ankommt, also eine Kombination von Elementen nur einmal gezählt wird. Dabei ist bevorzugt, dass jedes Federelement unterschiedliche Eigenschaften hat, so dass jede mögliche Kombination vorzugsweise unterschiedliche Schwingungseigenschaften aufweist.

So bestimmt sich der einstellbare Frequenzbereich einer solchen schwingfähigen Struktur vorzugsweise durch die maximale einstellbare und die minimale einstellbare Eigenfrequenz, wobei in dem hierdurch bestimmten Frequenzbereich bevorzugt im Wesentlichen eine Anzahl verschiedener Eigenfrequenzen eingestellt werden kann, die der Anzahl der verschiedenen Klemmmöglichkeiten entspricht.

Ein solcher Energiesammler ist mechanisch sehr einfach zu realisieren und äußerst robust. Durch geeignete Ausformung der Federelemente kann die Eigenfrequenz sehr breitbandig und fein aufgelöst eingestellt werden. Dabei wird nur in einem sehr kurzen Zeitraum Energie zum Einstellen verbraucht und zwar wenn die Klemmelemente durch die Aktoren entsprechend bewegt werden.

In einer bevorzugten Ausführungsform der Erfindung ist durch die schaltbare Klemmverbindung zwischen den Federelementen und dem Koppelelement eine Eigenfrequenz der schwingfähigen Struktur einstellbar, welche von den Federkonstanten der durch schaltbare Klemmverbindung mit dem Koppelement verbindbaren Federelemente abhängt.

Bevorzugt ist bei dieser Ausführungsform insbesondere durch die Auswahl der geklemmten Federelemente die Eigenfrequenz der schwingfähigen Struktur einstellbar.

In einem vereinfachten Modell dieser Ausführungsform kann ein einzelnes geklemmtes Federelement und die mit diesem verbundene Schwingmasse als einer Art harmonischer Oszillator in Form eines Federschwingers ohne Dämpfung betrachtet werden. Hat die betrachtete Feder die Federkonstante k, beträgt die Eigenfrequenz des im Verhältnis zum Koppelement schwingenden Federelements mit Schwingmasse bevorzugt $f_0 = 1/2\pi (k/m)^{1/2}$, wobei m bevorzugt die Masse der Schwingmasse ist.

In diesem vereinfachten Modell werden bei der Betrachtung der Eigenfrequenz nur die geklemmten Federelemente berücksichtigt, da die anderen vorzugsweise ebenso mit der Schwingmasse verbunden sind, jedoch nicht durch Klemmung mit dem Koppelement und hier vorzugsweise die Relativschwingung der schwingfähigen Struktur im Vergleich zum Koppelement betrachtet wird. Dabei wirken die nicht geklemmten Elemente vorzugsweise nicht wie eine Feder im Sinne des beschriebenen Federschwingers.

Werden nun mehrere Federelemente gleichzeitig geklemmt, handelt es zumindest in einem vereinfachen Modell um parallelgeschaltete Federelemente eines Federschwingers mit Schwingmasse m, so dass für die Berechnung der Eigenfrequenz die Federkonstanten addiert werden. Bei zwei Federelementen mit den Federkonstanten $k_1$ und $k_2$ ist die resultierende Eigenfrequenz in diesem Modell vorzugsweise $fo = 1/2\pi\{(k_1+k_2)/m\}^{1/2}$. So kann vorzugsweise durch Kombination verschiedener Federelemente mit verschiedenen Federkonstanten die Eigenfrequenz eingestellt werden.

Ein Fachmann weiß jedoch, dass das vorstehend beschriebene Modell die realen Vorgänge dieser Ausführungsform nur ungenau und modellhaft beschreibt. In Wirklichkeit haben z. B. auch die Federelemente selber eine Masse, die zu berücksichtigen ist. Des Weiteren spielt die Dämpfung eine Rolle, z. B. durch Reibungsprozesse. Außerdem beeinflussen vorzugsweise auch die nicht geklemmten Federelemente die Schwingungseigenschaften der Struktur, da diese bevorzugt weiterhin mit der Schwingmasse verbunden sind und beispielsweise durch ihre Masse und eine Dämpfung der Schwingung auf diese einwirken.

Es ist dem Fachmann jedoch klar, dass die schwingfähige Struktur in ihren Schwingungseigenschaften, insbesondere in der Eigenfrequenz, durch die Federkonstanten der geklemmten Federelemente beeinflusst werden und dadurch Einstellmöglichkeiten bestehen, die insbesondere bei Federelementen, welche unterschiedliche Federkonstanten aufweisen, bezüglich der Anzahl der Einstellmöglichkeiten bevorzugt durch die Anzahl verschiedener Kombinationen von klemmbaren Federelementen gegeben sind. Vorzugsweise wird dabei die Eigen- bzw. Resonanzfrequenz zumindest im Wesentlichen oder in etwa durch die vorstehend beschriebenen Zusammenhänge, insbesondere durch die Federkonstanten der geklemmten Federelemente bestimmt.

Begriffe wie im Wesentlichen, ungefähr, ca. etc. beschreiben bevorzugt einen Toleranzbereich von weniger als ± 20%, bevorzugt weniger als ± 10%, besonders bevorzugt weniger als ± 5% und insbesondere weniger als ± 1%. "Ähnlich" beschreibt bevorzugt Größen, die ungefähr gleich sind. Teilweise bzw. "in etwa" beschreibt bevorzugt zu mindestens 1%, besonders bevorzugt mindestens 5 %, mindestens 10 % oder mindestens 20 %, in einigen Fällen zu mindestens 40 %.

In einer bevorzugten Ausführungsform der Erfindung umfasst die schwingfähige Struktur eine Balkenstruktur.

Eine Balkenstruktur umfasst vorzugsweise nebeneinander parallel angeordnete, längliche Federelemente. Diese sind vorzugsweise im Wesentlichen in einer Ebene rechteckförmig, wobei länglich vorzugsweise bedeutet, dass die Federelemente eine Längsseite aufweisen, welche deutlich größer ist als eine Querseite. Vorzugsweise ähneln die Federelemente einzelnen Balken bzw. sind balkenförmig. Bevorzugt ist die Schwingmasse dabei an einer der Querseiten aller umfassten Federelemente befestigt, sodass die Schwingmasse fest mit allen Federelementen verbunden ist.

Die Balkenstruktur kann vorzugsweise aus mehreren, einzelnen, balkenförmigen Federelemente bestehen, welche parallel zueinander angeordnet sind und auf einer Seite an ihren Querseiten gemeinsam mit der Schwingmasse verbunden sind. So können durch unterschiedliche Geometrien und/oder Materialien einzelner Federelemente deren individuelle Federkonstanten einzeln bestimmt werden. Es kann jedoch auch bevorzugt sein, dass die einzelnen Federelemente aus einem vorzugsweise flächigen und/oder rechteckigen Ausgangselement gefertigt werden, indem z. B. das Ausgangelement in die Federelemente unterteilt bzw. dieses aus dem Ausgangselement zugeschnitten werden, in dem dieses in Längsstreifen geschnitten wird. Dabei können vorzugsweise durch unterschiedliche Breiten der Streifen verschiedene Federkonstanten der einzelnen Federelemente erzielt werden. So können die Federelemente besonders einfach und kostengünstig hergestellt werden. Es kann dabei weiterhin bevorzugt sein, die Federkonstanten zu beeinflussen, indem ebenfalls die Länge oder Dicke der Streifen variiert wird.

In einer Vorzugsvariante werden die einzelnen Federelemente aus einem Ausgangselement geformt, indem dieses durch parallele Schnitte entlang einer Kante in verschiedene Federelemente unterteilt wird, ohne dass das Ausgangselement jedoch vollständig durchgetrennt wird. So können die einzelnen Federelemente vorzugsweise in einem schmalen Bereich des Ausgangselements miteinander verbunden bleiben, wobei beispielsweise an dieser Seite die gemeinsame Schwingmasse angebracht werden kann. Eine Balkenstruktur ist besonders einfach herzustellen und ermöglicht auch insgesamt einen besonders einfachen Aufbau des Energiesammlers mit parallel zueinander angeordneten Klemmelementen für die parallel zueinander angeordneten Federbalken. Eine Balkenstruktur ist insbesondere für eine Schwingung der nicht geklemmten Seite der Struktur geeignet, an der sich vorzugsweise die Schwingmasse befindet.

In einer weiteren bevorzugten Ausführungsform der Erfindung umfasst die schwingfähige Struktur eine rotationssymmetrische schwingfähige Struktur.

Eine rotationssymmetrische schwingfähige Struktur umfasst insbesondere Federelemente, welche rotationssymmetrisch sind. Z. B. kann in etwa an einem Symmetriepunkt und/oder einer Symmetrieachse dieser Struktur die bevorzugt um diesen Punkt/diese Achse rotationssymmetrische Schwingmasse angebracht vorliegen, wobei die einzelnen Federelemente in radialer Richtung von diesem Punkt/dieser Achse im Wesentlichen rotationssymmetrisch angeordnet sind, bspw. in durch verschieden breite, in radialer Richtung angeordneter Elemente. Daher ist die Struktur vorzugsweise auch nur im Wesentlichen und nicht exakt rotationssymmetrisch, da die Federelemente in diesem Fall zwar bevorzugt in radialer Richtung gleich lang und in etwa rotationssymmetrisch angeordnet sind, jedoch vorzugsweise verschiedene Breiten aufweisen, um verschiedene Federkonstanten zu realisieren.

Eine rotationsymmetrische schwingfähige Struktur kann jedoch auch eine im Wesentlichen rotationssymmetrische Schwingmasse umfassen, wobei die Federelemente und/oder deren Anordnung nur teilweise oder gar nicht rotationssymmetrisch ist. In dieser Variante wird die Rotationssymmetrie insbesondere durch die Symmetrie der Schwingmasse begründet. Vorzugsweise sind die Klemmelemente zur Klemmung der einzelnen Federelemente entlang der radial äußeren Enden der Federelemente angeordnet, um die Federelemente an diesen Enden zu klemmen. Eine rotationssymmetrische Struktur ist insbesondere geeignet für eine Schwingungsrichtung entlang der Symmetrieachse der Rotationssymmetrie und/oder entlang einer Schwingungsrichtung durch den Symmetriepunkt der Rotationssymmetrie.

In einer weiteren bevorzugten Ausführungsform der Erfindung umfasst die Balkenstruktur als Federelemente parallel zueinander angeordnete Federbalken, welche an einer ersten Querseite mit der Schwingmasse verbunden sind, wobei die Eigenfrequenz der schwingfähigen Struktur durch die Breite, Dicke und/oder Länge der durch die schaltbare Klemmverbindung mit dem Koppelement an einer zweiten Querseite verbindbaren Federbalken eingestellt werden kann. Dabei haben die genannten Größen unabhängig vom gewählten Material der Federelemente vorzugsweise einen Einfluss auf die jeweiligen Federkonstanten der Federelemente und somit auf die Eigenfrequenz durch Klemmung der jeweiligen Federelemente.

Dabei können die geometrischen Eigenschaften vorzugsweise so gewählt werden, dass jede einstellbare Kombination eine unterschiedliche Eigenfrequenz zur Folge hat und diese im Wesentlichen über den gesamten einstellbaren Bereich mit einer festen Auflösung eingestellt werden kann. Ein Fachmann weiß, wie er dies realisieren kann, in dem er beispielsweise den einstellbaren Frequenzbereich durch die Anzahl der verschiedenen Kombinationsmöglichkeiten geklemmter Federelemente teilt, eine gewünschte Auflösungsbreite erhält und die Federelement entsprechend designt. Diese Ausführungsform ist besonders praktisch und bietet zur Einstellung der Federkonstanten eine große Flexibilität.

In einer weiteren bevorzugten Ausführungsform der Erfindung umfasst die rotationssymmetrische Struktur mindestens eine rotationssymmetrische Membranfeder enthaltend mehrere Federelemente und/oder eine rotationssymmetrische Schwingmasse und Spiralfedern als Federelemente, wobei die Struktur in einer axialen Richtung schwingfähig gelagert ist.

Eine Membranfeder ist vorzugsweise eine Federstruktur mit radial kreisförmig, um einen Symmetriepunkt angeordneten Federelementen. Die Anordnung der Federelemente ist im Wesentlichen vorzugsweise ebenfalls rotationssymmetrisch, sodass durch Drehung der Membranfeder um eine Symmetrieachse geometrisch ineinander überführt werden kann. Dabei können die einzelnen Federelemente jedoch in Ihrer Ausformung senkrecht zur radialen Ausrichtung, z. B. in ihrer Breite, unterschiedlich sein, um unterschiedliche Federkonstanten zu realisieren.

Vorzugsweise ist entlang der Symmetrieachse die Schwingmasse und/oder der elektromechanische Wandler angeordnet. Es ist insbesondere bevorzugt, dass entlang der Symmetrieachse an jeweils einem unteren und einem oberen Ende der Schwingmasse eine Membranfeder angeordnet ist. Dabei kann die Schwingmasse bevorzugt auch zwischen den Membranfedern an einem axialen Element entlang einer Verbindungsachse zwischen diesen beiden angeordnet sein.

Dabei kann es bevorzugt sein, dass sowohl die obere als auch die untere Membranfeder durch Klemmelemente jeweils klemmbar sind. Dadurch kann die Bandbreite und/oder Einstellbarkeit der Resonanzfrequenz der schwingfähigen Struktur erhöht werden. Es kann bevorzugt sein, dass sowohl an der oberen als auch der unteren Membranfeder mindestens ein Federelement geklemmt ist. So kann erreicht werden, dass eine Schwingung im Wesentlichen entlang einer axialen Ausrichtung entlang der Symmetrieachse stattfindet und vorzugsweise unerwünschte Quermoden vermindert bzw. verhindert werden können.

Es kann ebenso bevorzugt sein, dass eine Membranfeder dauerhaft geklemmt ist und somit ein Führungselement für eine Schwingung entlang der Symmetrieachse ermöglicht und Quermoden vermindert. Für diese Konstellation könnte die dauerhafte geklemmte Membranfeder Federelemente aufweisen, die alle exakt gleich ausgeformt sind, da hier vorzugsweise keine unterschiedlichen Federkonstanten der einzelnen Federelemente benötigt werden. Ebenfalls könnte anstatt einer fest geklemmte Membranfeder auch mindestens eine Spiralfeder umfasst sein, die anstelle der Membranfeder als Führelement dient und bevorzugt an einem Ende mit der Schwingmasse und am anderen Ende mit dem Gehäuse verbunden ist, wobei eine Ausrichtung vorzugsweise entlang der Symmetrieachse vorgenommen wird.

Es kann ebenso bevorzugt sein, dass die Schwingmasse nur an einer Seite eine Membranfeder umfasst und entlang der Symmetrieachse am anderen Ende in axialer Richtung gleitend gelagert ist, um vorzugsweise axiale Schwingungen zu ermöglichen und/oder Quermoden zu verhindern. Dabei kann ebenso bevorzugt sein, dass nicht die Schwingmasse selber, sondern ein auf dieser Seite der Schwingmasse vorhandenes axiales Element gelagert ist, welches mit der Schwingmasse und der Membranfeder verbunden ist.

Wird nur eine Membranfeder verwendet, ist es, insbesondere bei einem Fehlen weiterer Führungselemente, bevorzugt, dass immer mindestens zwei Federelemente der Membranfeder geklemmt werden, welche einander in radialer Richtung im Wesentlichen oder zumindest teilweise gegenüberliegen. So können ebenfalls Schwingungs- bzw. Bewegungsmoden (Quermoden) in anderer als in axialer Richtung vermindert werden. Die gleichzeitig geklemmten Federelemente weisen zu diesem Zweck bevorzugt im Wesentlichen gleiche oder ähnliche Federkonstanten auf.

Die Schwingmasse kann dabei bevorzugt einen Magnet, z. B. einen Topfmagnet umfassen, welcher bei axialer Schwingung zumindest bereichsweise eine Schwingung innerhalb einer mit dem Gehäuse verbundenen Spule vollführt und somit ein wesentliches Element eines elektromechanischen Wandlers realisiert.

Es kann vorzugsweise ebenso eine rotationssymmetrische Schwingmasse und Spiralfedern als Federelemente bereitgestellt werden, wobei die Struktur in einer axialen Richtung schwingfähig gelagert ist. Diese umfasst bevorzugt eine rotationssymmetrische Schwingmasse und auf dieser Schwingmasse angebrachte Spiralfedern. Die erwünschte axiale Schwingungsrichtung ist hier vorzugsweise die Achse der Rotationssymmetrie der z. B. zylindrischen Schwingmasse. Zur Verhinderung von Quermoden kann in dieser Ausführungsform z. B. die Schwingmasse dergestalt geführt werden, dass im Wesentlichen nur eine axiale Bewegung ermöglicht wird.

Z. B. kann eine zylindrische Schwingmasse entlang der seitlichen Mantelflächen geführt werden. Die Spiralfedern weisen vorzugsweise unterschiedliche Federkonstanten auf, beispielsweise durch unterschiedliche Dimensionierung und/oder der Verwendung unterschiedlicher Materialien. Die Spiralfedern können als Federelemente vorzugsweise ebenfalls einzeln durch Klemmelemente geklemmt werden. Dabei können insbesondere die nicht mit der Schwingmasse verbundenen Enden der Spiralfedern geklemmt werden.

Eine rotationssymmetrische Struktur ist je nach vorgegebenem Bauraum des Energiewandlers und/oder der Vorrichtung, welche die externen Vibrationen erzeugt, besonders geeignet.

In einer weiteren bevorzugten Ausführungsform der Erfindung umfasst die schwingfähige Struktur eine MEMS-Struktur, wobei die MEMS-Struktur vorzugsweise eine Balkenstruktur und/oder eine rotationssymmetrische Struktur aufweist.

Für die Herstellung kompakter, mechanischelektronischer Vorrichtungen wird heute auf vielen Anwendungsgebieten auf die Mikrosystemtechnik zurückgegriffen. Die so herstellbaren Mikrosysteme (engl. *microelectromechanical system,* kurz MEMS) werden vorzugsweise durch das Präfix "MEMS" gekennzeichnet. Sie sind sehr kompakt (Abmessungen vorzugsweise im Mikrometerbereich) bei gleichzeitig hervorragender Funktionalität und immer geringeren Herstellungskosten. MEMS Strukturen können vorteilhafterweise sehr kompakt gehalten werden und sind für eine Vielzahl von Anwendungen geeignet. Somit können z. B. auch sehr kleine Sensoren für spezielle Anwendungen, bei denen Vibrationen und/oder Schwingungen eine Rolle spielen, durch den Energiesammler mit elektrischer Energie versorgt werden.

In einer weiteren bevorzugten Ausführungsform der Erfindung umfasst die schwingfähige Struktur $n$ Federelemente, wobei bevorzugt Klemmelement und Aktor konfiguriert sind für $2^n$ schaltbare Klemmverbindungen zwischen Federelement und Koppelelement. In dieser Ausführungsform ist bevorzugt für jedes Federelement die Möglichkeit gegeben, geklemmt zu sein oder nicht, so dass insgesamt $2^n$ verschiedene Kombinationen erreicht werden können. Dabei ist vorzugsweise die Konfiguration umfasst, dass kein Element geklemmt ist. Daher ist in dieser Ausführungsform vorzugsweise auch im Fall, dass kein Federelement geklemmt ist, eine Führung und/oder Anordnung der schwingfähigen Struktur relativ zum Koppelelement und/oder Gehäuse gewährleistet.

Dies kann beispielsweise dadurch realisiert werden, dass bei einer Balkenstruktur zwei äußere Elemente fest mit dem Koppelelement verbunden sind und/oder dauerhaft von dem Klemmelement geklemmt werden. Somit dienen diese äußeren Elemente vorzugsweise nicht als Klemmelemente sondern als Führungselemente. Welche bevorzugt eine sichere Führung der Struktur und ein Schwingen in der gewünschten Schwingungsrichtung gewährleisten wobei nur sehr hochfrequente und/oder irrelevante Quermoden (Schwingungen in unerwünschte Richtungen) möglich sind.

In einer weiteren bevorzugten Ausführungsform der Erfindung umfasst die schwingfähige Struktur $n$ Federelemente umfasst, wobei $n$ größer oder gleich 3, bevorzugt größer oder gleich 4, 5, 6, 8 oder 10 ist. Die Anzahl der Federelemente kann sowohl gerade als auch ungerade sein. Vorzugsweise sind mehr als 10, 11, 12, 13, 14 15, 16, 17, 18, 19, 20, 25, 30, 40, 50, 60, 70. 80, 90, 100, 150 200, 300, 400 und/oder 500 Federelemente umfasst. Insbesondere bei einer schwingfähigen MEMS-Struktur können sehr viele Federelemente auf kleinsten Dimensionen umfasst sein. Umso größer die Anzahl der Federelemente, vorzugsweise mit unterschiedlichen Federkonstanten, umso größer ist vorteilhafterweise die Einstellmöglichkeit und/oder Auflösung der einstellbaren Resonanzfrequenz.

Bei einer rotationsymmetrischen Struktur kann es bevorzugt sein, dass nur eine gerade Anzahl an Federelementen umfasst ist, damit zur Minderung von Quermoden immer mindestens zwei einander gegenüberliegende Federelemente geklemmt werden können.

In einer weiteren bevorzugten Ausführungsform der Erfindung umfasst der elektromechanische Wandler einen induktiven, kapazitiven und/oder piezoelektrischen Wandler. Ein elektromechanischer Wandler in Form eines induktiven Wandlers funktioniert insbesondere aufgrund der elektromagnetischen Induktion, bei der eine sich abändernde elektromagnetische Flussdichte für die Entstehung eines elektrischen Feldes sorgt. Die sich ändernde magnetische Flussdichte wird dabei vorzugsweise durch ein sich relativ zu einem elektrischen Leiter bewegenden Magneten verursacht, wobei bevorzugt eines dieser Elemente mit der schwingfähigen Struktur, insbesondere der Schwingmasse verbunden ist und das andere mit dem Gehäuse.

Bei einer Schwingung der schwingfähigen Struktur gegenüber dem Gehäuse kann vorteilhafterweise eine elektrische (Wechsel-) Spannung erzeugt werden. Ein induktiver Wandler ist leicht herzustellen, robust und effektiv.

Bei einem kapazitiven elektromechanischen Wandler wird vorzugsweise ein Kondensator mit mindestens zwei zueinander beweglichen Elektroden, z. B. Platten, verwendet, wobei insbesondere eine Elektrode mit der schwingfähigen Struktur, vor allem mit der Schwingmasse verbunden ist und die andere mit dem Gehäuse. Durch eine Schwingung der Struktur kann somit eine Relativbewegung erzeugt werden, wodurch sich die Kapazität des durch die Elektroden gebildeten Kondensators ändert. Kernelement ist ein Kondensator mit veränderbarer Kapazität - etwa mit gegeneinander beweglichen Platten. Somit kann bei einer vorhandenen Ladung des vorzugsweise im Wesentlichen isolierten und/oder aufladbaren Kondensators die anliegende Spannung variiert werden und elektrische Energie erzeugt werden. Ein kapazitiver Wandler bietet insbesondere den Vorteil, dass durch geeignete geometrische Anordnung eine Vielzahl von Elektroden parallel zueinander angeordnet werden können, z. B. in einer Kammstruktur, so dass eine effiziente Erzeugung elektrischer Energie realisiert werden kann.

Ein piezoelektrischer Wandler funktioniert vorzugsweise auf Basis des piezoelektrischen Effekts. Aufgrund dieses Effekts kann bei einer elastischen Verformung eines Festkörpers aus entsprechendem Material aufgrund einer sich ändernden elektrischen Polarisation eine elektrischen Spannung erzeugt werden (direkter Piezoeffekt), welche bevorzugt abgegriffen und verwendet werden kann.

Geeignete Materialien umfassen vorzugsweise piezoelektrische Kristalle wie z. B. $\alpha$-Quarz, Lithiumnio-

bat, Galliumorthophosphat, Berlinit, Minerale der Turmalingruppe, Seignettesalz, Bariumtitanat (BTO) und/oder Blei-Zirkonat-Titanat (PZT), piezoelektrische Keramiken wie z. B. Blei-Zirkonat-Titanate (PZT) in polykristalliner Form und/oder Blei-Magnesium-Niobate (PMN). Ebenso können zur Verwendung des piezoelektrischen Effekts Zinkoxid (ZnO) und/oder Aluminiumnitrid (AlN) verwendet werden, welche insbesondere als Dünnschichten auf Silizium abgeschieden werden können. Auch Polyvinylidenfluorid (PVDF) ist vorzugsweise geeignet.

Der piezoelektrische Effekt kann beispielsweise verwendet werden, wenn z. B. die Federelemente selber piezoelektrisch sind und geeignete Materialien umfassen, wodurch bei einer Verformung der Federelemente bei einer Schwingung elektrische Energie erzeugt werden kann. Dabei kann vorzugsweise mindestens eines der Federelemente ein piezoelektrisches Material umfassen oder bevorzugt alle Federelemente. Es können ebenso nur oder zusätzlich die Führungselemente, insbesondere einer Balkenstruktur, das piezoelektrische Material umfassen. Ein piezoelektrischer Wandler ist aufgrund der unmittelbaren Umwandlung von Bewegungsenergie in elektrische Energie besonders effizient.

In einer weiteren bevorzugten Ausführungsform der Erfindung ist die schaltbare Klemmverbindung konfiguriert für eine Klemmung ausgesucht aus der Gruppe Schraubstockklemmverbindung, Scherenklemmverbindung, formschlüssige Klemmverbindung durch Translation eines Gegenelements auf ein Abschlusselement des Federelements und/oder direkte Klemmverbindung mit Piezoaktoren. Eine Schraubstockklemmverbindung ist vorzugsweise eine Klemmung, in welcher das Federelement ähnlich einem Schraubstock eingeklemmt wird. Dabei wird das Federelement vorzugsweise zwischen zwei Elementen eingeklemmt, welche vorzugsweise parallel zur einzuklemmenden Oberfläche ausgerichtet sind. Diese können relativ zueinander in eine dazu senkrechte Richtung bewegt werden, wobei die Bewegung durch einen Antrieb erfolgt.

Vorzugsweise erfolgt der Antrieb indirekt über ein mit mindestens einem der Elemente verbundenen Gewinde, eben vorzugsweise wie bei einem Schraubstock. Zum Einklemmen üben die Elemente vorzugsweise eine Haftreibung auf das eingeklemmte Federelement aus, so dass dieses kraft- und/oder formschlüssig eingeklemmt wird. Durch das Gewinde muss dabei vorzugsweise die benötigte Kraft zwischen den Elementen nicht permanent durch den Antrieb ausgeübt werden, weil bevorzugt eine Reibungskraft zwischen Gewinde und deren Führung ausgeübt wird und weil die Kraft vorzugsweise nicht in Drehrichtung entlang der Schraubenlinie wirkt. Dabei ist vorzugsweise nur ein Element angetrieben, dass andere ist bevorzugt fest mit dem Koppelelement verbunden.

Eine Scherenklemmverbindung umfasst bevorzugt zwei drehbar auf einer Achse über Kreuz gelagerte Elemente. Zwischen den Bereichen der Elemente, welche auf einer Seite der Achse gelagert werden, kann vorzugsweise das Federelement geklemmt werden, während die Bereiche der Elemente auf der anderen Seite der Achse bevorzugt als Hebelarme fungieren. Auf die Hebelarme kann eine Kraft zum Klemmen und zum Lösen der Klemmung ausgeübt werden, z. B. durch einen Antrieb.

Bevorzugt wird durch das Überkreuzlagern der Elemente erreicht, dass durch ein Zusammendrücken oder -ziehen der Hebelarme ein Verklemmen realisiert werden kann. Somit ähnelt diese Ausführungsform vorzugsweise einer Schere, wobei beim Zusammenbringen der Hebelarme (ähnlich zu den Griffen einer Schere) ein Verklemmen anstelle eines Schneidevorgangs stattfindet. Diese Klemmverbindung kann vorzugsweise auch Zangenklemmung genannt werden, da die Klemmung ähnlich einer Zange funktioniert. Es kann jedoch ebenso bevorzugt sein, dass die Elemente nicht über Kreuz gelagert sind, so dass ein Auseinanderdrücken der Hebelarme ein Verklemmen bedeutet. Bei dieser Klemmverbindung kann vorteilhafterweise der Hebelarm so gewählt werden, dass nur eine geringe Kraft zum Verklemmen der Federelemente benötigt wird.

Bei einem Klemmelement in Form einer formschlüssigen Klemmung durch Translation eines Gegenelements auf ein Abschlusselement des Federelements ist das Federelement vorzugsweise bereits mit einem Abschlusselements am zu verklemmendem Ende verbunden. Ein zweites Element, bevorzugt in Form eines Gegenelements, kann in einer Führung durch einen Aktor verschoben werden und damit die Bewegungsfreiheit des Federelements auf kontrollierter Weise einschränken, indem das Gegenelement, welches vorzugsweise als ein zum Abschlusselement passendes Gegenelement geformt ist, durch Formschluss das Federelement in Abhängigkeit der Verschiebung mehr oder weniger stark klemmt. Vorzugsweise ist die Verschiebungs- bzw. Translationsrichtung entsprechend angepasst. Bei dem Formschluss kann es vorzugsweise zu einem leichten Aufspreizen des verschiebbaren Gegenelements kommen, sodass eine zusätzliche Stützung an den Wänden der Führung entsteht, die der Aufspreizung entgegenwirkt bzw. diese begrenzt. Das Abschlusselement kann vorzugsweise dreiecksförmig oder konusförmig sein, wobei das Gegenelement vorzugsweise eine komplementär passende Formaufweist. Durch die beiden Winkel des Formschlusses von Abschlusselement und Gegenelement kann vorteilhafterweise der benötigte Hub, die benötigte Kraft und/oder die Aufspreizung variiert werden.Vorzugsweise können bei den vorgenannten Klemmmechanismen ansteuerbare Aktoren zum Antrieb, z. B. in Form von Piezoaktoren verwandt werden.

Bevorzugt kann zum Klemmen auch eine direkte Klemmverbindung mit Piezoaktoren eingesetzt werden. Dabei kann vorzugsweise das Federelement direkt zwischen zwei durch Piezoaktoren angesteuerte Elemente geklemmt werden. Diese Form der Klemmverbindung ist besonders einfach zu realisieren und erlaubt ein schnelles Schalten zwischen verschiedenen Klemmzuständen.

In einer weiteren bevorzugten Ausführungsform der Erfindung umfasst der Aktor einen Schrittmotor, einen Hubmagnet, einen Piezoaktor und/oder einen Drehmagneten.

Ein Schrittmotor ist vorzugsweise ein elektrischer Synchronmotor, bei dem der Rotor durch ein schrittweise rotierendes, elektromagnetisches Feld der Statorspulen in seiner Rotation schrittweise gesteuert werden kann. Schrittmotoren können äußerst präzise Bewegungen durchführen.

Ein Hubmagnet ist vorzugsweise ein Elektromagnet umfassend eine Leiterspule, in der sich bei Stromdurchfluss ein magnetisches Feld bildet. Die Spule umfasst bevorzugt einen ferromagnetischen Kern, insbesondere aus Eisen, der das Magnetfeld vorzugsweise führt und verstärkt. Ein solcher Hubmagnet kann vorzugsweise zur Steuerung mindestens eines magnetischen und/oder magnetisierbaren Klemmelements verwendet werden, welches durch den Hubmagnet gesteuert zwischen einer Stellung zum Klemmen des Federelements und einer Stellung zum Lösen des Federelements bewegt werden kann. Durch einen Hubmagnet kann eine Klemmkraft effizient bereitgestellt werden.

Ein Piezoelement ist vorzugsweise ein Bauteil, welches den inversen Piezoeffekt ausnutzt, um durch das Anlegen von einer elektrischen Spannung eine mechanische Bewegung auszuführen. Ein Piezoelement kann entweder direkt für die Klemmverbindung verwendet werden (s. o.) oder als Antrieb der jeweiligen verwendeten Klemmverbindung. Piezoaktoren sind präzise steuerbar und äußerst kompakt.

Ein Drehmagnet ist bevorzugt ein Elektromagnet, welches so angeordnet und geführt ist, dass vorzugsweise durch Steuerung über eine angelegte elektrische Spannung eine Drehbewegung ausgeführt werden kann. Drehmagneten sind einfacher und robuster als Elektromotoren und haben eine hohe Dynamik.

In einer weiteren bevorzugten Ausführungsform der Erfindung umfasst das Federelement ein Metall, vorzugsweise ausgesucht aus der Gruppe umfassend Stahl, insbesondere Federstahl, Kupfer, Berylliumkupfer, Aluminium und/oder eine Legierung dieser. Federstahl besitzt vorzugsweise im Vergleich zu anderen Stählen eine höhere Festigkeit bei großer Elastizität und eignet sich daher besonders gut für die Herstellung verbesserter und langlebiger Federelemente. Federstahl hat vorzugsweise eine Elastizitätsgrenze von mindestens 1150 N/mm$^2$ und eine Zugfestigkeit von 1300 bis 1600 N/mm$^2$. Federstahl umfasst bevorzugt eine Legierung mit z. B. Silizium als Legierungselement, wobei eine möglichst gleichmäßige Verteilung des Kohlenstoffgehalts verwendet wird.

In einer weiteren bevorzugten Ausführungsform der Erfindung umfasst der Energiesammler eine Regelvorrichtung, vorzugsweise einen Mikrocontroller, wobei Regelvorrichtung und Klemmelement konfiguriert sind für eine Steuerung der Eigenfrequenz der schwingfähigen Struktur durch Steuerung der schaltbaren Klemmverbindung.

Eine Regelvorrichtung ist bevorzugt geeignet, elektrische Steuersignale auszugeben, welche die Aktoren der Klemmelemente ansteuern. Dafür kann die Regelvorrichtung bevorzugt mindestens einen Signalausgang aufweisen, wobei ein Ausgang vorzugsweise mit einem Signaleingang des Aktuators verbunden wird. Vorzugsweise umfasst die Regelvorrichtung eine Anzahl von Ausgängen, welche mindestens der Anzahl, der für das mindestens eine Klemmelement verwendeten Aktoren entspricht, wobei bevorzugt jeder Aktor mit einem Signalausgang der Regelvorrichtung verbunden ist. Die hier ausgegebenen Signale werden vorzugsweise Ansteuerungssignale oder Steuerungssignale genannt und sind vorzugsweise direkt oder nach einer Wandlung (z. B. durch einen Digital-Analog Wandler) und/oder Verstärkung zur Ansteuerung der Aktoren geeignet. Soll eine bestimmte Eigenfrequenz eingestellt werden, werden vorzugsweise entsprechend Federelemente geklemmt, indem die Regelvorrichtung in geeigneter Weise die Aktoren ansteuert.

Dies kann z. B. dadurch geschehen, dass die einer einzustellenden Eigenfrequenz entsprechende Kombination zu klemmender Federelemente in einer Zuordnungstabelle (engl.: Look-up-table oder kurz LUT) von der Regelvorrichtung ermittelt und die Ausgänge der Regelvorrichtung entsprechend geschaltet werden. Eine vorgegebene Eigenfrequenz kann z. B. als Eingangswert der Regelvorrichtung vorgegeben werden oder von dieser aufgrund bestimmter Eingangssignale ermittelt werden. Kann eine vorgegebene Eigenfrequenz nicht eingestellt werden, wird vorzugsweise eine einstellbare Eigenfrequenz eingestellt, die dieser Frequenz von allen einstellbaren Werten am nächsten liegt.

Eine Regelvorrichtung kann bevorzugt eine integrierte Schaltung umfassen, welche digitale und/oder analoge elektrische Signale bevorzugt für die vorgenannten Zwecke empfangen und/oder erzeugen kann. Bevorzugt sind die Ansteuerungssignale analoge Signale, welche bezüglich der Signaleigenschaften (Amplitude, Frequenz, Phase, vorzugsweise im zeitlichen Verlauf). Die Regelvorrichtung kann bevorzugt auch einen Mikrocontroller, ein Field Programmable Gate Array (FPGA), ein Computer und/oder eine sonstige elektronische Schaltung umfassen . Auch Digital-Analog-Wandler, Analog-Digital-Wandler, Speicher und/oder (Signal-) Verstärker können Bestandteil einer Regelvorrichtung sein. Ein Mikrocontroller ist vorzugsweise ein Halbleiterchip umfassend einen Prozessor, welcher zusätzliche Funktionen bzw. Peripheriefunktionen enthält. Bevorzugt ist ein Arbeits- und/oder Programmspeicher umfasst.

In einer weiteren bevorzugten Ausführungsform der Erfindung umfasst der Energiesammler einen Sensor, welcher gemeinsam mit der Regelvorrichtung für eine Erfassung einer dominanten Frequenz von mechanischen Vibrationen des Koppelelements konfiguriert ist, wobei die Steuerung der Eigenfrequenz eine Anpassung der Eigenfrequenz an die dominante Frequenz umfasst. Der Sensor ist vorzugsweise ein elektrisches, elektronisches und/oder elektromechanisches Bauteil, welches Schwingungseigenschaften, insbesondere eine Schwingungsfrequenz, direkt oder indirekt messen und als Ausgangssignal ausgeben kann.

Das Ausgangssignal kann dabei vorzugsweise sowohl digital als auch analog sein. Mit direkter Messung ist vorzugsweise gemeint, dass das Ausgangssignal direkt und/oder nach einer Digitalisierung und/oder Verstärkung zum Erfassen einer dominanten Frequenz, vorzugsweise durch die Regelvorrichtung, verwendet werden kann. Mit indirekter Messung ist vorzugsweise gemeint, dass das Signal nach einer weiteren Verarbeitung, vorzugsweise durch die Regelvorrichtung, zur Erfassung einer dominanten Frequenz verwendet werden kann.

Ein Sensor gibt vorzugsweise zu einem gegebenen Zeitpunkt ein Messsignal aus, welches einem gemessenen Wert über einen Zeitraum entspricht, welcher vorzugsweise ein gemittelter Wert ist. Eine dominante Frequenz von mechanischen Vibrationen des Koppelements entspricht vorzugsweise durch die Verbindung des Koppelelements mit dem Gehäuse und des Gehäuse mit einer vibrierenden Vorrichtung einer dominanten Frequenz der Vorrichtung. Dabei kann eine Vibration vorzugsweise eine Überlagerung von Schwingungen mit verschiedenen Frequenzen sein. Die an einer Vibration beteiligten Frequenzen können sich innerhalb kurzer Zeitabstände ändern.

Eine dominante Frequenz ist vorzugsweise eine für die Charakterisierung der Vibration wesentliche Frequenz zu einem bestimmten Zeitpunkt oder über einen gewissen Zeitraum. Dabei können bevorzugt die an einer Vibration beteiligten Frequenzen bestimmt werden, z. B. durch eine Fourier-Analyse eines für die Vibration repräsentativen Signals, z: B. eines Sensors zur Erfassung einer räumlichen Position. Dabei kann bevorzugt direkt die Frequenz, welche den größten Anteil am Signal aufweist, als dominante Frequenz gewählt werden. Der Zeitraum, über den eine dominante Frequenz zu einem Zeitpunkt bestimmt wird, kann vor allem nach praktischen Erwägungen bestimmt und/oder angepasst werden, z. B Effizienzüberlegungen oder Implementierungsaufwand und richtet sich vorzugsweise auch nach der Art und/oder Eigenschaft der externen Vibrationen.

In einer weiteren bevorzugten Ausführungsform der Erfindung ist der Sensor ein Beschleunigungssensor. Dem Fachmann sind verschiedene Typen von Beschleunigungssensoren und deren bestimmungsgemäße Verwendung bekannt. Beschleunigungssensoren können z. B. Piezoelektrische Sensoren, MEMS-Sensoren, magnetische Induktionssensoren und/oder Dehnungsmessstreifen umfassen. Aus einem Signal der Beschleunigung der Vorrichtung können vorzugsweise Frequenzen der Vibration hergeleitet werden, da die Beschleunigung bevorzugt ein für die Vibration repräsentatives Signal darstellt.

In einer weiteren bevorzugten Ausführungsform der Erfindung wird der Sensor durch eine elektrische Schaltung gebildet, welche anhand einer Signalform der durch den elektromechanischen Wandler erzeugten elektrischen Energie die dominante Frequenz der mechanischen Vibrationen des Koppelementes erfasst. Dabei wird vorzugsweise das schwingfähige System von den externen Schwingungen angeregt, wobei auch außerhalb der Resonanzfrequenz eine elektrische Spannung durch den elektromechanischen Wandler generiert werden kann.

Dieses Spannungssignal kann z. B. über einen Analog-Digital Wandler an der Regelvorrichtung ausgewertet werden. Es kann ebenso bevorzugt sein, dass das Spannungssignal mit einer entsprechenden elektrischen bzw. elektronischen Schaltung vorverarbeitet und erst dann an den Analog-Digital Wandler und/oder die Regelvorrichtung gegeben wird. Ein Spannungssignal kann z.B. auch mit einer elektronischen Schaltung in Form eines Komparators in ein Rechtecksignal gewandelt werden. Der Komparator detektiert in diesem Fall die Flanken und kombiniert mit einem Zeitsignal kann daraus die Frequenz ermittelt werden. Bevorzugt kann hierbei ein Timer verwendet werden, welche anhand der detektierten Flanken Rückschlüsse auf eine Frequenz zulässt.

Vorteilhaft benötigt man bei Verwendung eines Komparators keinen separaten Analog-Digital-Wandler, da die Komparator Schaltung einen solchen Wandler selbst darstellt. Der Sensor umfasst dabei vorzugsweise die Elemente, welche zur Auslesung der Frequenz benötigt werden.

Ein Komparator vergleicht bevorzugt ein Eingangssignal mit einem vorgegebenen Schwellwert und erzeugt ein binäres Ausgangssignal in Abhängigkeit davon, ob das aktuelle Eingangssignal den Schwellwert über- oder unterschreitet. In der Regelvorrichtung, z. B. dem Mikrocontroller, kann entsprechend der gemessenen Frequenz(en) die dominante Frequenz erkannt werden und die schwingfähige Struktur durch passende Klemmung von Federelementen eingestellt werden. In dieser Ausführungsform wird kein zusätzlicher Sensor zur Bestimmung der dominanten Frequenz benötigt und der Aufbau des Energiesammlers vereinfacht sich. Stattdessen fungiert der Energiesammler bzw. dessen elektrische Schaltung selbst als Sensor.

In einem weiteren Aspekt betrifft die Erfindung ein Verfahren zur Einstellung einer Eigenfrequenz eines beschriebenen Energiesammlers, umfassend die folgenden Schritte:

a) Bereitstellen eines Energiesammlers

b) Zuordnung einer vorgegebenen Eigenfrequenz zu einer schaltbaren Klemmverbindung zwischen den mindestens zwei Federelementen und dem Koppelelement

c) Einstellung der Eigenfrequenz der schwingfähigen Struktur durch Schalten der zugeordneten schaltbaren Klemmverbindung.

Der durchschnittliche Fachmann erkennt, dass technische Merkmale, Definitionen und Vorteile bevorzugter Ausführungsformen der erfindungsgemäßen Vorrichtung auch für das erfindungsgemäße Verfahren und dessen Ausführungsformen gelten.

Die vorgegebene Eigenfrequenz entspricht insbesondere einer einzustellenden Eigenfrequenz der schwingfähigen Struktur. Diese kann sich z. B. aufgrund der Messung einer dominanten Frequenz einer externen Schwingung ergeben oder aber einfach extern vorgegeben sein, weil z. B. die dominante Frequenz der externen Schwingung bereits bekannt ist.

Eine Zuordnung bedeutet bevorzugt, dass der vorgegebenen Eigenfrequenz eine schaltbare Klemmverbindung im Sinne einer bestimmten Konstellation geklemmter und nicht geklemmter Federelemente der schwingfähigen Struktur zugeordnet wird, so dass eine Eigenfrequenz der Struktur eingestellt wird, welche der vorgegebenen Eigenfrequenz bestmöglich entspricht. Diese wird dann aufgrund der Zuordnung vorzugsweise durch das Klemmelement bzw. die Klemmelemente eingestellt. Durch dieses Verfahren kann eine gewünschte Eigenfrequenz innerhalb der physikalisch einstellbaren Eigenfrequenzen eingestellt werden und der Energiesammler erzeugt besonders effizient elektrische Energie.

In einer bevorzugten Ausführungsform der Erfindung erfolgt die Zuordnung der vorgegebenen Eigenfrequenz zu der schaltbaren Klemmverbindung auf Basis einer Zuordnungstabelle. Dadurch kann die Zuordnung besonders schnell und ohne aufwendige Rechenoperationen vorgenommen werden.

In einer weiteren bevorzugten Ausführungsform der Erfindung umfasst das Verfahren zusätzlich folgende Schritte:

i. Variation der Eigenfrequenz der schwingfähigen Struktur innerhalb eines Frequenzbereichs um die vorgegebene Eigenfrequenz;

ii. Überwachung einer elektrischen Ausgangsleistung des elektromechanischer Wandlers während der Variation

iii. Einstellen einer korrigierten Eigenfrequenz bei welcher eine maximale Ausgangsleistung vorliegt.

Es kann aus verschiedensten Gründen der Fall sein, dass die vorgegebene Eigenfrequenz nicht die Eigenfrequenz ist, bei der die elektrische Ausgangsleistung des Energiesammlers maximal ist, etwa, weil eine dominante Frequenz der externen Schwingung nicht richtig oder aufgrund einer komplexen Schwingungsmode nicht präzise gemessen wurde oder weil eine Zuordnung zwischen vorgegebenen Eigenfrequenz zur schaltbaren Klemmverbindung nicht optimiert ist.

Um dennoch optimale Ergebnisse zu erzielen, kann es bevorzugt sein, dass die Eigenfrequenz der schwingfähigen Struktur variiert wird bei gleichzeitiger Überwachung der elektrischen Ausgangsleistung des elektromechanischen Wandlers. Kann die Leistung durch die Variation erhöht werden und erreicht diese ihr Maximum bei einer anderen Frequenz, dann wird für eine effiziente Erzeugung elektrischer Energie vorzugsweise dieser Wert eingestellt. Die Frequenz kann dabei z. B. innerhalb des gesamten Spektrums der Eigenfrequenzen der schwingfähigen Struktur variiert werden oder aber nur in einem schmaleren Bereich um die ursprünglich eingestellte Eigenfrequenz. Hierdurch kann das Verfahren sehr schnell vorgenommen werden und die Leistung des Energiesammlers weiter verbessert werden.

In einer weiteren bevorzugten Ausführungsform der Erfindung wird eine Eigenfrequenz eines Energiesammlers an eine dominante Frequenz einer mechanischen Vibration angepasst, wobei das Verfahren die folgenden Schritte umfasst:

a) Erkennen der dominanten Frequenz von mechanischen Vibrationen des Koppelelements;

b) Zuordnung der dominanten Frequenz zu einer einstellbaren Eigenfrequenz der schwingfähigen Struktur, bevorzugt durch eine Zuordnungstabelle

c) Zuordnung einer schaltbaren Klemmverbindung zu der einstellbaren Eigenfrequenz, vorzugsweise durch eine Zuordnungstabelle,

d) Anpassung der Eigenfrequenz durch Schalten der zugeordneten Klemmverbindung.

Diese Ausführungsform beschreibt vorzugsweise ein Erkennen der dominanten Frequenz einer externen Schwingung (Vibration) und eine entsprechende Anpassung der Resonanz- bzw. Eigenfrequenz der Schwingung. Das Erkennen der dominanten Frequenz kann, wie vorstehend beschrieben vorgenommen werden, z. B. durch einen Sensor oder anhand des Ausgangssignals des elektromechanischen Wandlers. Ein solcher Energiesammler kann sich vorteilhafterweise autonom an eine externe Schwingung durch Anpassung der Eigenfrequenz anpassen und kann so eine möglichst hohe Ausbeute elektrischer Energie eigenständig generieren.

In einer weiteren bevorzugten Ausführungsform der Erfindung umfasst das beschriebene Verfahren zusätzlich folgende Schritte:

e) Variation der Eigenfrequenz der schwingfähigen Struktur innerhalb eines Frequenzbereichs um die in Schritt d) angepasste Eigenfrequenz;

f) Überwachung einer elektrischen Ausgangsleistung des elektromechanischer Wandlers während der Variation

g) Einstellen einer korrigierten Eigenfrequenz bei welcher eine maximale Ausgangsleistung vorliegt.

In dieser Ausführungsform wird das vorstehende Verfahren weiter verbessert, in dem auch nach Erkennen einer dominanten Frequenz eine Variation der eingestellten Eigenfrequenz vorgenommen wird mit dem Ziel, die elektrische Energieerzeugung weiter zu optimieren. Hierzu sollte insbesondere jene Eigenfrequenz eingestellt werden, welche die Ausgangsleistung maximiert. Dabei wird die Eigenfrequenz, bei der die Ausgangsleistung maximal ist, als korrigierte Eigenfrequenz bezeichnet. Dem Fachmann ist klar, dass es sich bei dieser auch um die bereits in Schritt d) eingestellte, sogenannte angepasste Eigenfrequenz handeln kann.

In einer weiteren bevorzugten Ausführungsform der Erfindung umfasst das Verfahren eine selbstlernende Zuordnung nach Schritt b), wobei die korrigierte Eigenfrequenz für eine dominante Frequenz als Korrekturwert gespeichert wird und anhand einer statistisch relevanten Anzahl von Korrekturwerten eine Korrektur der Zuordnung, bevorzugt der Zuordnungstabelle, vorgenommen wird. Bevorzugt können hierbei auch Machine-Learning Strategien zum Einsatz kommen.

Durch die bevorzugte Speicherung des Korrekturwertes kann die Zuordnung von einstellbarer Eigenfrequenz zur dominanten Frequenz weiter verbessert werden. Es können z. B. für jede gemessene dominante Frequenz Korrekturwerte gespeichert werden und diese statistisch ausgewertet werden, sodass bei einer Abweichung des statistischen Korrekturwertes von einer ursprünglichen Zuordnung der Korrekturwert gespeichert und zukünftig angewendet wird. So findet vorteilhafterweise ein Selbstlernprozess der Zuordnung statt, welcher vorzugsweise kontinuierlich oder in bestimmten Zeitintervallen vorgenommen werden kann. So kann die Energieausbeute mit jeder Anwendung verbessert werden. Auch wird die Abhängigkeit von Modellannahmen bei der Erstellung von Zuordnungstabellen verringert. Das selbstlernende System erreicht zuverlässig optimale Ergebnisse in den verschiedensten Anwendungen.

Auch kann ein Anlernen des Systems ohne das Vorhandensein einer Zuordnungstabelle bzw. Look-Up-Table (LUT) erfolgen. Dies erfordert zwar zu Beginn einen hohen Energieaufwand, wobei die Aktoren jedoch in einer Laborumgebung zum Einlernen aus einem Netzteil versorgt werden könnten. Vorteilhaft würde dies die in der Regel ausführlichen Messungen zur Erstellung der Zuordnungstabellen bzw. LUT erübrigen.

## Detaillierte Beschreibung

Im Folgenden soll die Erfindung anhand von Beispielen und Figuren näher erläutert werden, ohne auf diese beschränkt zu sein.

## Kurzbeschreibung der Abbildungen

**Figur 1** zeigt eine schematische Darstellung des Energiesammlers mit einer Balkenstruktur und einem induktiven elektromechanischen Wandler.

**Figur 2** zeigt eine schwingfähige Struktur samt Klemmelementen.

**Figur 3** zeigt eine Ausführungsform der Balkenstruktur.

**Figur 4** zeigt eine Balkenstruktur mit Federbalken verschiedener Breite, Dicke und Länge.

**Figur 5** zeigt eine teilweise durch das Klemmelement mit dem Koppelelement verbundene Balkenstruktur.

**Figur 6** zeigt einen Energiesammler mit einem kapazitiven elektromechanischen Wandler.

**Figur 7** zeigt einen Energiesammler mit einem piezoelektrischen elektromechanischen Wandler.

**Figur 8** zeigt eine rotationssymmetrische schwingfähige Struktur mit Membranfedern.

**Figur 9** zeigt eine rotationssymmetrische schwingfähige Struktur mit Spiralfedern.

**Figur 10** zeigt ein auf einer Schraubstockklemmverbindung basierendes Klemmelement.

**Figur 11** zeigt ein auf einer Scherenklemmverbindung basierendes Klemmelement.

**Figur 12** zeigt ein Klemmelement in Form einer formschlüssigen Klemmung durch Translation eines Gegenelements auf ein Abschlusselement des Federelements.

**Figur 13** zeigt verschiedene Resonanzkurven einer schwingfähigen Struktur aufgrund verschiedener möglicher Kombinationen geklemmter Federelemente.

## Detaillierte Beschreibung der Abbildungen

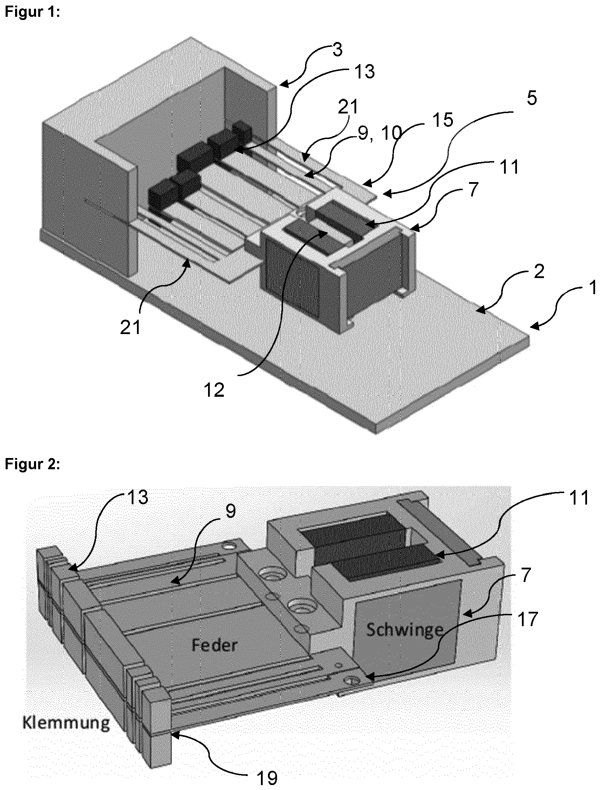

**Figur 1** zeigt eine schematische Darstellung des Energiesammlers **1** mit einer Balkenstruktur **15** und einem induktiven elektromechanischen Wandler **11**. Dabei umfasst die schwingfähige Struktur **5** Federelemente **9** in Form von Federbalken **10**, an denen an einer ersten Querseite eine Schwingmasse **7** angebracht vorliegt, welche einen Magneten als Teil des induktiven elektromechanischen Wandlers **11** umfasst, der schwingend um eine Spule **12** gelagert ist, welche fest mit der Basisplatte **2** verbunden ist. Die einzelnen Federbalken **10** können über die Klemmelemente **13** mit dem Koppelelement **3** verbunden werden. Die beiden äußeren Elemente der Balkenstruktur sind als Führungselemente **21** fest mit dem Koppelelement verbunden. Durch individuelle Klemmung der Federelemente **9** durch die Klemmelemente **13** kann eine zur externen Schwingungsanregung passende Eigen- bzw. Resonanzfrequenz der schwingfähigen Struktur **5** eingestellt werden.

**Figur 2** zeigt die schwingfähige Struktur samt Klemmelementen **13**. Dabei handelt es sich im eine Balkenstruktur wie in Figur 1. Man sieht, dass an der ersten Querseite der Balkenstruktur **17** die Schwingmasse **7** angeordnet vorliegt, welche einen Dauermagneten als Teil eines induktiven Wandlers **11** umfasst. An der zweiten Querseite der Balkenstruktur **19** werden die Federelemente **9** durch die Klemmelemente **13** geklemmt.

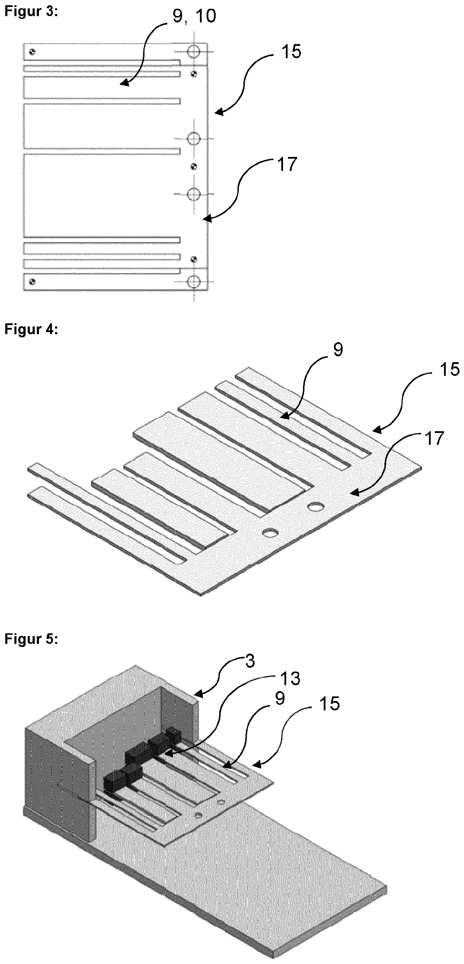

**Figur 3** zeigt eine Ausführungsform der Balkenstruktur **15** in einer Draufsicht. Die einzelnen Federbalken **9, 10** haben unterschiedliche Breiten, so dass jeder Federbalken **10** durch seine ihm eigene Federkonstante im geklemmten Zustand die Resonanzfrequenz der schwingfähigen Struktur beeinflusst wird. Figur 3 illustriert, dass die verschiedenen Federbalken **10** der Balkenstruktur **15** durch Einschnitte in ein einziges, flächiges Element erhaltbar sind, welches an der ersten Querseite **17** weiterhin zusammenhängend ist. Dort kann die Schwingmasse angebracht werden.

**Figur 4** zeigt eine Balkenstruktur **15** mit Federbalken **9** nicht nur verschiedener Dicke, sondern auch verschiedener Länge und Breite, um Federbalken mit unterschiedlichen Federkonstanten zu erreichen. Auch bei dieser Balkenstruktur sind die Federelemente an der ersten Querseite **17** zusammenhängend und aus einem Element gefertigt.

**Figur 5** zeigt eine durch die teilweise in den Klemmelementen **13** durch Klemmung verbundenen Federelemente **9** mit dem Koppelelement **3** verbundene Balkenstruktur **15**.

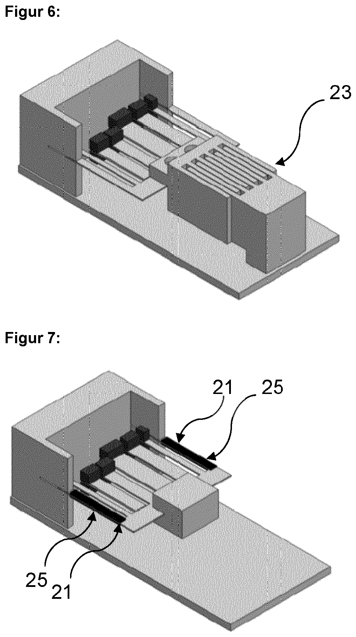

**Figur 6** zeigt einen Energiesammler mit einem kapazitiven elektromechanischen Wandler 23, welcher sich durch eine Vielzahl von Elektroden in Form von Platten auszeichnet, die parallel zueinander angeordnet sind und alternierend mit der schwingfähigen Struktur und der Basisplatte verbunden sind.

**Figur** 7 zeigt einen Energiesammler mit jeweils einem piezoelektrischen elektromechanischen Wandler **25**, welcher in den äußeren Führelementen **21** der Balkenstruktur vorliegt.

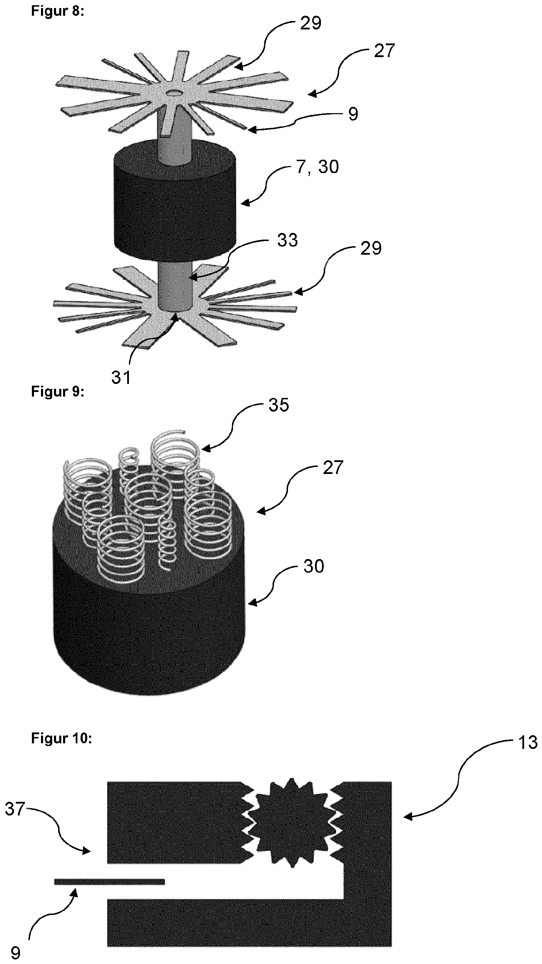

**Figur 8** zeigt eine rotationssymmetrische schwingfähige Struktur **27** mit Membranfedern **29**. Die Membranfedern **29** und die Schwingmasse **7, 30** sind beide rotationssymmetrisch um eine Symmetrieachse **31** angeordnet, wobei die Membranfedern **29** entlang der Symmetrieachse **31** jeweils oberhalb und unterhalb der Schwingmasse **7** an einem optionalen axialen Element **33** angeordnet sind. Die Membranfedern **29** umfassen Federelemente **9** verschiedener Breite und somit verschiedener Federkonstanten, wobei sich vorzugsweise, wie gezeigt, immer zwei gleichartige Federelemente **9** einander gegenüberliegen. Werden diese gleichzeitig durch jeweils ein Klemmelement (nicht gezeigt) geklemmt, können Schwingungen in anderer Richtung als entlang der Symmetrieachse **31** verhindert werden (sogenannte Quermoden).

**Figur 9** zeigt eine rotationssymmetrische schwingfähige Struktur **27** mit Spiralfedern **35**. Diese umfasst eine rotationssymmetrische Schwingmasse **30** und auf dieser Schwingmasse **30** angebrachte Spiralfedern **35**. Die erwünschte Schwingungsrichtung ist hier ebenfalls die Achse der Rotationssymmetrie der vorliegend zylindrischen Schwingmasse **30**. Um hierbei Quermoden zu verhindern, kann beispielsweise die Schwingmasse **30** entlang der seitlichen Mantelflächen durch eine Führung (nicht gezeigt) geführt werden. Die Spiralfedern **35** sind unterschiedlich dimensioniert und können auch aus unterschiedlichen Materialien bestehen, um die Federkonstanten zu variieren. An ihrem auf der Abbildung lose gezeigten Ende können die Spiralfedern 35 individuell durch ein Klemmelement (nicht gezeigt) geklemmt werden, um die Resonanzfrequenz der schwingfähigen Struktur zu variieren.

**Figur 10** zeigt ein auf einer Schraubstockklemmverbindung **37** basierendes Klemmelement **13**. Dabei kann das einzelne Federelement **9** zwischen zwei parallele Elemente geklemmt werden, welche ähnlich einem Schraubstock relativ zueinander bewegt werden können.

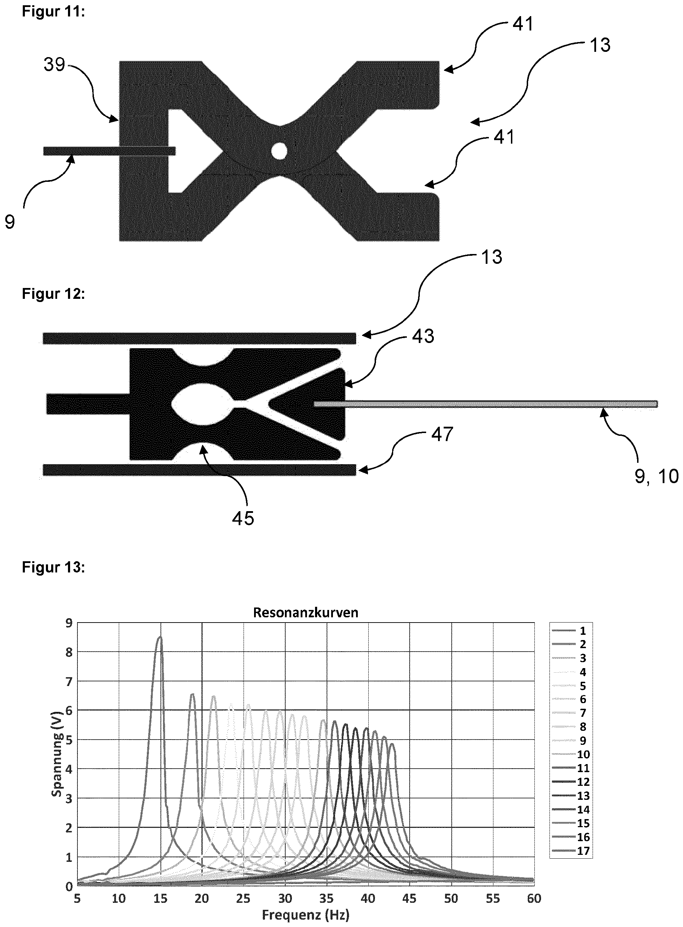

**Figur 11** zeigt ein auf einer Scherenklemmverbindung **39** basierendes Klemmelement **13**. Dabei kann ein einzelnes Federelement **9** zwischen zwei zangenoder scherenartig zueinander drehbar gelagerten Elementen geklemmt werden. Auf der Gegenseite bezogen auf die drehbare Lagerung finden sich die Hebelarme **41**, über die durch einen Aktor Kraft ausgeübt werden kann, um das Federelement **9** zu klemmen oder die Klemmung zu lösen.

**Figur 12** zeigt ein Klemmelement **13** in Form einer formschlüssigen Klemmung durch Translation eines Gegenelements **45** auf ein Abschlusselement **43** des Federelements **9**. Bei dieser Ausführungsform ist bereits ein Element, bevorzugt in Form eines Abschlusselements **43**, mit dem Federelement **9** an dessen zu verklemmendem Ende verbunden, Dieses Federelement **9** kann z. B. ein Biegebalken bzw. Federbalken **10** sein. Ein zweites Element, bevorzugt in Form eines Gegenelements **45**, kann in einer Führung **47** durch einen Aktor verschoben werden und damit die Bewegungsfreiheit des Federelements mehr oder weniger einschränken, indem das Gegenelement **45**, welches vorzugsweise als ein zum Abschlusselement **43** passendes Gegenelement **45** geformt ist, durch Formschluss das Federelement **9** mehr oder minder vollständig klemmt. Bei diesem Formschluss kommt es zu einem leichten Aufspreizen des verschiebbaren Gegenelements **45,** sodass vorzugsweise eine zusätzliche Stützung an den Wänden der Führung **47** entsteht. Durch die beiden Winkel des Formschlusses von Abschlusselement **43** und Gegenelement **45** kann der benötigte Hub, die benötigte Kraft und/oder die Aufspreizung variiert werden.

**Figur 13** zeigt verschiedene Resonanzkurven einer schwingfähigen Struktur aufgrund verschiedener möglicher Kombinationen geklemmter Federelemente. Dabei ist auf der Abszissenachse die Schwingungsfrequenz in Hertz [Hz] der schwingfähigen Struktur abgebildet und auf der Ordinatenachse messbedingt die Spannung in Volt [V], welche proportional zur Schwingungsamplitude der schwingfähigen Struktur ist. Das jeweilige Amplitudenmaximum jeder Kurve markiert dabei im Wesentlichen die Resonanzfrequenz. Jede Kurve stellt eine mögliche Kombination geklemmter Federelemente der schwingfähigen Struktur dar. Es ist deutlich zu sehen, wie durch die verschiedenen Konstellationen der Klemmung die Resonanzfrequenz mit hoher Auflösung und in manchen Frequenzbereichen nahezu kontinuierlich einstellbar ist. Für die in Figur 12 gezeigten Resonanzkurven wurden nur 17 der 64 möglichen Kombinationen dargestellt, sodass noch feinere Auflösungen möglich sind.

Bezugszeichenliste

| | |
|---|---|
| 1 | Energiesammler |
| 2 | Basisplatte |
| 3 | Koppelelement |
| 5 | Schwingfähige Struktur |
| 7 | Schwingmasse |
| 9 | Federelement |
| 10 | Federbalken |
| 11 | Induktiver elektromechanischer Wandler |
| 12 | Spule |
| 13 | Klemmelement |
| 15 | Balkenstruktur |
| 17 | Erste Querseite der Balkenstruktur |
| 19 | Zweite Querseite der Balkenstruktur |
| 21 | Führungselement |
| 23 | Kapazitiver elektromechanischer Wandler |
| 25 | Piezoelektrischer elektromechanischer Wandler |
| 27 | Rotationssymmetrische Struktur |
| 29 | Membranfeder |
| 30 | Rotationssymmetrische Schwingmasse |
| 31 | Symmetrieachse |
| 33 | Axiales Element |
| 35 | Spiralfeder |
| 37 | Schraubstockklemmverbindung |
| 39 | Scherenklemmverbindung |
| 41 | Hebelarm |
| 43 | Abschlusselement |
| 45 | Gegenelement |
| 47 | Führung des Gegenelements |

**Patentansprüche**

1. Energiesammler (1) zur Gewinnung elektrischer Energie aus mechanischen Vibrationen, umfassend:

   a. ein Gehäuse
   b. ein Koppelelement (3), welches kraft- und/oder formschlüssig mit dem Gehäuse verbunden ist, sodass sich mechanische Vibrationen des Gehäuses auf das Koppelement (3) übertragen;
   c. eine schwingfähige Struktur (5) umfassend mindestens zwei Federelemente (9) und eine Schwingmasse (7),
   d. einen elektromechanischen Wandler, wobei der elektromechanische Wandler und die schwingfähige Struktur (5) konfiguriert sind für eine Erzeugung elektrischer Energie bei einer Schwingung der schwingfähigen Struktur (5),

   **dadurch gekennzeichnet, dass**
   der Energiesammler ein Klemmelement (13) und einen Aktor umfasst, welche konfiguriert sind für eine schaltbare Klemmverbindung zwischen jedem der mindestens zwei Federelemente (9) der schwingfähigen Struktur (5) und dem Koppelelement (3).

2. Energiesammler (1) gemäß dem vorherigen Anspruch,
   **dadurch gekennzeichnet, dass**
   durch die schaltbare Klemmverbindung zwischen den Federelementen (9) und dem Koppelelement (3) eine Eigenfrequenz der schwingfähigen Struktur (5) einstellbar ist, welche von den Federkonstanten der durch schaltbare Klemmverbindung mit dem Koppelement (3) verbindbaren Federelemente (9) abhängt.

3. Energiesammler (1) gemäß Anspruch einem oder mehreren der vorherigen Ansprüche,
   **dadurch gekennzeichnet, dass**
   die schwingfähige Struktur (5) eine Balkenstruktur (15) und/oder eine rotationssymmetrische Struktur (27) umfasst.

4. Energiesammler (1) gemäß Anspruch 3,
   **dadurch gekennzeichnet, dass**
   die Balkenstruktur (15) als Federelemente (9) parallel zueinander angeordnete Federbalken (10) umfasst, welche an einer ersten Querseite (17) mit der Schwingmasse (7) verbunden sind, wobei die Eigenfrequenz der schwingfähigen Struktur (5) durch die Breite, Dicke und/oder Länge der durch die schaltbare Klemmverbindung mit dem Koppelement (3) an einer zweiten Querseite (19) verbindbaren Federbalken (10) eingestellt werden kann

5. Energiesammler (1) gemäß Anspruch 3, **dadurch gekennzeichnet, dass** die rotationssymmetrische Struktur (27) eine rotationssymmetrische Membranfeder (29) enthaltend mehrere Federelemente (9) und/oder eine rotationssymmetrische Schwingmasse (30) und Spiralfedern (35) als Federelemente (9) umfasst, wobei die Struktur in einer axialen Richtung schwingfähig gelagert ist.

6. Energiesammler (1) gemäß einem oder mehreren der vorherigen Ansprüche, **dadurch gekennzeichnet, dass** die schwingfähige Struktur (5) eine MEMS-Struktur umfasst, wobei die MEMS-Struktur vorzugsweise eine Balkenstruktur (15) und/oder eine rotationssymmetrische Struktur (27) aufweist.

7. Energiesammler (1) gemäß einem oder mehreren der vorherigen Ansprüche **dadurch gekennzeichnet, dass** die schwingfähige Struktur (5) n Federelemente (9) umfasst, wobei n größer gleich 3, bevorzugt größer gleich 4, 5, 6, 8 oder 10 ist und wobei Klemmelement (13) und Aktor bevorzugt konfiguriert sind für $2^n$ schaltbare Klemmverbindungen zwischen Federelement (9) und Koppelelement (3).

8. Energiesammler (1) gemäß einem oder mehreren der vorherigen Ansprüche, **dadurch gekennzeichnet, dass** der elektromechanische Wandler einen induktiven (11), kapazitiven (23) und/oder piezoelektrischen Wandler (25) umfasst.

9. Energiesammler (1) gemäß einem oder mehreren der vorherigen Ansprüche, **dadurch gekennzeichnet, dass** die schaltbare Klemmverbindung konfiguriert ist für eine Klemmung ausgesucht aus der Gruppe Schraubstockklemmverbindung (37), Scherenklemmverbindung (39), formschlüssige Klemmverbindung durch Translation eines Gegenelements (45) auf ein Abschlusselement (43) des Federelements (9) und/oder direkte Klemmverbindung mit Piezoaktoren und/oder der Aktor einen Schrittmotor, ein Hubmagnet, einen Piezoaktor und/oder ein Drehmagnet umfasst.

10. Energiesammler (1) gemäß einem oder mehreren der vorherigen Ansprüche, **dadurch gekennzeichnet, dass** der Energiesammler (1) eine Regelvorrichtung, vorzugsweise einen Mikrocontroller, umfasst, wobei Regelvorrichtung und Klemmelement (13) konfiguriert sind für eine Steuerung der Eigenfrequenz der schwingfähigen Struktur (5) durch Steuerung der schaltbaren Klemmverbindung.

11. Energiesammler (1) gemäß dem vorherigen Anspruch,

    **dadurch gekennzeichnet, dass** der Energiesammler (1) einen Sensor umfasst, welcher gemeinsam mit der Regelvorrichtung konfiguriert ist für eine Erfassung einer dominanten Frequenz von mechanischen Vibrationen des Koppelelements (3) und wobei die Steuerung der Eigenfrequenz eine Anpassung der Eigenfrequenz an die dominante Frequenz umfasst, wobei bevorzugt
    der Sensor ein Beschleunigungssensor ist oder
    der Sensor durch eine elektrische Schaltung gebildet wird, welche anhand einer Signalform der durch den elektromechanischen Wandler erzeugten elektrischen Energie die dominante Frequenz der mechanischen Vibrationen des Koppelementes (3) erfasst.

12. Verfahren zur Einstellung einer Eigenfrequenz eines Energiesammlers (1) gemäß einem oder mehreren der vorherigen Ansprüche, umfassend die folgenden Schritte:

    a) Bereitstellen eines Energiesammlers (1) gemäß einem oder mehreren der vorherigen Ansprüche
    b) Zuordnung einer vorgegebenen Eigenfrequenz zu einer schaltbaren Klemmverbindung zwischen den mindestens zwei Federelementen (9) und dem Koppelelement (3)
    c) Einstellung der Eigenfrequenz der schwingfähigen Struktur (5) durch Schalten der zugeordneten schaltbaren Klemmverbindung.

13. Verfahren gemäß dem vorherigen Anspruch, umfassend zusätzlich folgende Schritte:

    i. Variation der Eigenfrequenz der schwingfähigen Struktur (5) innerhalb eines Frequenzbereichs um die vorgegebene Eigenfrequenz;
    ii. Überwachung einer elektrischen Ausgangsleistung des elektromechanischer Wandlers während der Variation
    iii. Einstellen einer korrigierten Eigenfrequenz bei welcher eine maximale Ausgangsleistung vorliegt.

14. Verfahren gemäß einem der vorherigen Ansprüche 12 oder 13, wobei eine Eigenfrequenz eines Energiesammlers (1) gemäß Anspruch 11 an eine dominante Frequenz einer mechanischen Vibration angepasst wird, umfassend die folgenden Schritte:

a) Erkennen der dominanten Frequenz von mechanischen Vibrationen des Koppelelements (3);

b) Zuordnung der dominanten Frequenz zu einer einstellbaren Eigenfrequenz der schwingfähigen Struktur (5), bevorzugt durch eine Zuordnungstabelle

c) Zuordnung einer schaltbaren Klemmverbindung zu der einstellbaren Eigenfrequenz, vorzugsweise durch eine Zuordnungstabelle,

d) Anpassung der Eigenfrequenz durch Schalten der zugeordneten Klemmverbindung. wobei das Verfahren optional die folgenden zusätzlichen Schritte umfasst:

e) Variation der Eigenfrequenz der schwingfähigen Struktur (5) innerhalb eines Frequenzbereichs um die in Schritt d) angepasste Eigenfrequenz;

f) Überwachung einer elektrischen Ausgangsleistung des elektromechanischer Wandlers während der Variation

g) Einstellen einer korrigierten Eigenfrequenz bei welcher eine maximale Ausgangsleistung vorliegt.

15. Verfahren gemäß dem vorherigen Anspruch, umfassend eine selbstlernende Zuordnung nach Schritt b), wobei die korrigierte Eigenfrequenz für eine dominante Frequenz als Korrekturwert gespeichert wird und anhand einer statistisch relevanten Anzahl von Korrekturwerten eine Korrektur der Zuordnung, bevorzugt der Zuordnungstabelle, vorgenommen wird.

**Claims**

1. An energy collector (1) for obtaining electrical energy from mechanical vibrations, comprising:

    a. a housing
    b. a coupling element (3), which is connected in a frictionlocked and/or formfitting manner to the housing, so that mechanical vibrations of the housing are transferred to the coupling element (3);
    c. a structure capable of oscillating (5) comprising at least two spring elements (9) and an oscillating mass (7),
    d. an electromechanical transducer, wherein the electromechanical transducer and the structure capable of oscillating (5) are configured to generate electrical energy during an oscillation of the structure capable of oscillating (5),

    **characterized in that**
    the energy collector comprises a clamping element (13) and an actuator, which are configured for a switchable clamp connection between each of the at least two spring elements (9) of the structure capable of oscillating (5) and the coupling element (3) .

2. The energy collector (1) as claimed in the preceding claim, **characterized in that**
a natural frequency of the structure capable of oscillating (5), which is dependent on the spring constants of the spring elements (9) connectable to the coupling element (3) by the switchable clamp connection, is settable by the switchable clamp connection between the spring elements (9) and the coupling element (3).

3. The energy collector (1) as claimed in one or more of the preceding claims,
**characterized in that**
the structure capable of oscillating (5) comprises a bar structure (15) and/or a rotationally-symmetrical structure (27).

4. The energy collector (1) as claimed in claim 3, **characterized in that**
the bar structure (15) comprises as spring elements (9) spring bars (10) arranged in parallel to one another, which are connected on a first transverse side (17) to the oscillating mass (7), wherein the natural frequency of the structure capable of oscillating (5) can be set by the width, thickness, and/or length of the spring bars (10) connectable by the switchable clamp connection to the coupling element (3) on a second transverse side (19).

5. The energy collector (1) as claimed in claim 3, **characterized in that**
the rotationally-symmetrical structure (27) comprises a rotationally-symmetrical membrane spring (29) containing multiple spring elements (9) and/or a rotationally-symmetrical oscillating mass (30) and spiral springs (35) as spring elements (9), wherein the structure is mounted so it is capable of oscillating in an axial direction.

6. The energy collector (1) as claimed in one or more of the preceding claims,
**characterized in that**
the structure capable of oscillating (5) comprises a MEMS structure, wherein the MEMS structure preferably has a bar structure (15) and/or a rotationally-symmetrical structure (27).

7. The energy collector (1) as claimed in one or more of the preceding claims,
**characterized in that**
the structure capable of oscillating (5) comprises n spring elements (9), wherein n is greater than or equal to 3, preferably greater than or equal to 4, 5, 6, 8, or 10 and wherein clamping element (13) and actuator are preferably configured for $2^n$ switchable clamp connections between spring element (9) and coupling element (3).

8. The energy collector (1) as claimed in one or more of the preceding claims,
**characterized in that**
the electromechanical transducer comprises an inductive (11), capacitive (23), and/or piezoelectric transducer (25).

9. The energy collector (1) as claimed in one or more of the preceding claims,

**characterized in that**
the switchable clamp connection is configured for a clamp chosen from the group vice clamp connection (37), scissors clamp connection (39), formfitting clamp connection by translation of a counter element (45) on a terminus element (43) of the spring element (9), and/or direct clamp connection using piezo actuators
and/or
the actuator comprises a stepping motor, a solenoid magnet, a piezo actuator, and/or a rotary magnet.

10. The energy collector (1) as claimed in one or more of the preceding claims,
**characterized in that**
the energy collector (1) comprises a regulating device, preferably a microcontroller, wherein regulating device and clamping element (13) are configured for a control of the natural frequency of the structure capable of oscillating (5) by control of the switchable clamp connection.

11. The energy collector (1) as claimed in the preceding claim,

**characterized in that**
the energy collector (1) comprises a sensor, which is configured jointly with the regulating device for detecting a dominant frequency of mechanical vibrations of the coupling element (3) and wherein the control of the natural frequency comprises an adjustment of the natural frequency to the dominant frequency, wherein preferably
the sensor is an acceleration sensor
or
the sensor is formed by an electric circuit, which detects the dominant frequency of the mechanical vibrations of the coupling element (3) on the basis of a signal form of the electric energy generated by the electromechanical transducer.

12. A method for setting a natural frequency of an energy collector (1) as claimed in one or more of the preceding claims, comprising the following steps:

a) providing an energy collector (1) as claimed in one or more of the preceding claims
b) assigning a predefined natural frequency to a switchable clamp connection between the at least two spring elements (9) and the coupling element (3)
c) setting the natural frequency of the structure capable of oscillating (5) by switching the assigned switchable clamp connection.

13. The method as claimed in the preceding claim, comprising the additional following steps:

i. varying the natural frequency of the structure any (5) within a frequency range around the predefined natural frequency;
ii. monitoring an electrical output power of the electromechanical transducer during the variation;
iii. setting a corrected natural frequency at which a maximum output power exists.

14. The method as claimed in one of preceding claims 12 or 13, wherein a natural frequency of an energy collector (1) as claimed in claim 11 is adjusted to a dominant frequency of a mechanical vibration, comprising the following steps:

a) recognizing the dominant frequency of mechanical vibrations of the coupling element (3);
b) assigning the dominant frequency to a settable natural frequency of the oscillating structure (5), preferably by way of an assignment table;
c) assigning a switchable clamp connection to the settable natural frequency, preferably by way of an assignment table,
d) adjusting the natural frequency by switching the assigned clamp connection,

wherein the method optionally comprises the following additional steps:

e) varying the natural frequency of the structure capable of oscillating (5) within a frequency range around the natural frequency adjusted in step d);
f) monitoring an electrical output power of the electromechanical transducer during the variation;
g) setting a corrected natural frequency at which a maximum output power exists.

15. The method as claimed in the preceding claim, comprising a self-learning assignment according to step b), wherein the corrected natural frequency for a dominant frequency is stored as a correction value and a correction of the assignment, preferably of the assignment table, is carried out on the basis of a statistically relevant number of correction values.

## Revendications

1. Collecteur d'énergie (1) pour obtenir de l'énergie électrique à partir de vibrations mécaniques, comprenant :

    a. un boîtier

    b. un élément d'accouplement (3) qui est relié par force et/ou par complémentarité de forme au boîtier, de sorte que les vibrations mécaniques du boîtier sont transmises à l'élément d'accouplement (3) ;

    c. une structure oscillante (5) comprenant au moins deux éléments ressort (9) et une masse oscillante (7),

    d. un convertisseur électromécanique, dans lequel le convertisseur électromécanique et la structure oscillante (5) sont configurés pour générer de l'énergie électrique lorsque la structure oscillante (5) oscille,

    **caractérisé en ce que**
    le collecteur d'énergie comprend un élément de serrage (13) et un actionneur qui sont configurés pour une liaison de serrage commutable entre chacun des au moins deux éléments ressort (9) de la structure oscillante (5) et l'élément d'accouplement (3).

2. Collecteur d'énergie (1) selon la revendication précédente,
    **caractérisé en ce que**
    la liaison de serrage commutable entre les éléments ressort (9) et l'élément d'accouplement (3) permet de régler une fréquence propre de la structure oscillante (5), qui dépend des constantes de ressort des éléments ressort (9) pouvant être reliés à l'élément d'accouplement (3) par une liaison de serrage commutable.

3. Collecteur d'énergie (1) selon une ou plusieurs des revendications précédentes,
    **caractérisé en ce que**
    la structure oscillante (5) comprend une structure de poutre (15) et/ou une structure à symétrie de révolution (27).

4. Collecteur d'énergie (1) selon la revendication 3,
    **caractérisé en ce que**
    la structure de poutre (15) comprend des poutres élastiques (10) disposées parallèlement les unes aux autres en tant qu'éléments ressort (9) et qui sont reliées à la masse oscillante (7) sur un premier côté transversal (17), dans lequel la fréquence propre de la structure oscillante (5) peut être réglée par la largeur, l'épaisseur et/ou la longueur des poutres élastiques (10) pouvant être reliées à l'élément d'accouplement (3) sur un second côté transversal (19) par la liaison de serrage commutable.

5. Collecteur d'énergie (1) selon la revendication 3,
    **caractérisé en ce que**
    la structure à symétrie de révolution (27) comprend un ressort à diaphragme à symétrie de révolution (29) contenant plusieurs éléments ressort (9) et/ou une masse oscillante à symétrie de révolution (30) et des ressorts hélicoïdaux (35) en tant qu'éléments ressort (9), dans lequel la structure est montée de manière à pouvoir osciller dans une direction axiale.

6. Collecteur d'énergie (1) selon une ou plusieurs des revendications précédentes,
    **caractérisé en ce que**
    la structure oscillante (5) comprend une structure MEMS, dans lequel la structure MEMS présente de préférence une structure de poutre (15) et/ou une structure à symétrie de révolution (27) .

7. Collecteur d'énergie (1) selon une ou plusieurs des revendications précédentes,
    **caractérisé en ce que**
    la structure oscillante (5) comprend n éléments ressort (9), où n est supérieur ou égal à 3, de préférence supérieur ou égal à 4, 5, 6, 8 ou 10 et dans lequel l'élément de serrage (13) et l'actionneur sont configurés de préférence pour $2^n$ liaisons de serrage commutables entre l'élément ressort (9) et l'élément d'accouplement (3).

8. Collecteur d'énergie (1) selon une ou plusieurs des revendications précédentes,
    **caractérisé en ce que**
    le convertisseur électromécanique comprend un convertisseur inductif (11), capacitif (23) et/ou piézoélectrique (25).

9. Collecteur d'énergie (1) selon une ou plusieurs des revendications précédentes,

    **caractérisé en ce que**
    la liaison de serrage commutable est configurée pour un serrage sélectionné dans le groupe constitué d'une liaison de serrage par étau (37), d'une liaison de serrage en ciseaux (39), d'une liaison de serrage par complémentarité de forme par translation d'un contre-élément (45) sur un élément de terminaison (43) de l'élément ressort (9) et/ou d'une liaison de serrage directe avec des actionneurs piézo
    et/ou

l'actionneur comprend un moteur pas à pas, un aimant de levage, un actionneur piézo et/ou un aimant rotatif.

**10.** Collecteur d'énergie (1) selon une ou plusieurs des revendications précédentes, **caractérisé en ce que** le collecteur d'énergie (1) comprend un dispositif de régulation, de préférence un microcontrôleur, dans lequel le dispositif de régulation et l'élément de serrage (13) sont configurés pour commander la fréquence propre de la structure oscillante (5) en commandant la liaison de serrage commutable.

**11.** Collecteur d'énergie (1) selon la revendication précédente, **caractérisé en ce que**

le collecteur d'énergie (1) comprend un capteur qui est configuré avec le dispositif de régulation pour détecter une fréquence dominante de vibrations mécaniques de l'élément d'accouplement (3) et dans lequel la commande de la fréquence propre comprend une adaptation de la fréquence propre à la fréquence dominante, dans lequel de préférence
le capteur est un accéléromètre
ou
le capteur est formé par un circuit électrique qui détecte la fréquence dominante des vibrations mécaniques de l'élément d'accouplement (3) sur la base d'une forme de signal de l'énergie électrique générée par le convertisseur électromécanique.

**12.** Procédé de réglage d'une fréquence propre d'un collecteur d'énergie (1) selon une ou plusieurs des revendications précédentes, comprenant les étapes suivantes :

a) fourniture d'un collecteur d'énergie (1) selon une ou plusieurs des revendications précédentes
b) affectation d'une fréquence propre prédéterminée à une liaison de serrage commutable entre les au moins deux éléments ressort (9) et l'élément d'accouplement (3)
c) réglage de la fréquence propre de la structure oscillante (5) par commutation de la liaison de serrage commutable affectée.

**13.** Procédé selon la revendication précédente, comprenant en outre les étapes suivantes :

i. variation de la fréquence propre de la structure oscillante (5) dans une plage de fréquences autour de la fréquence propre prédéfinie ;
ii. surveillance d'une puissance électrique de sortie du convertisseur électromécanique pendant la variation ;
iii. réglage d'une fréquence propre corrigée à laquelle une puissance de sortie maximale est présente.

**14.** Procédé selon l'une des revendications précédentes 12 ou 13, dans lequel une fréquence propre d'un collecteur d'énergie (1) selon la revendication 11 est adaptée à une fréquence dominante d'une vibration mécanique, le procédé comprenant les étapes suivantes :

a) détection de la fréquence dominante de vibrations mécaniques de l'élément d'accouplement (3) ;
b) affectation de la fréquence dominante à une fréquence propre réglable de la structure oscillante (5), de préférence au moyen d'un tableau d'affectation ;
c) affectation d'une liaison de serrage commutable à la fréquence propre réglable, de préférence au moyen d'un tableau d'affectation,
d) réglage de la fréquence propre par commutation de la liaison de serrage affectée,

dans lequel le procédé comprend éventuellement les étapes supplémentaires suivantes :

e) variation de la fréquence propre de la structure oscillante (5) dans une plage de fréquences autour de la fréquence propre adaptée à l'étape d) ;
f) surveillance d'une puissance électrique de sortie du convertisseur électromécanique pendant la variation ;
g) réglage d'une fréquence propre corrigée à laquelle une puissance de sortie maximale est présente.

**15.** Procédé selon la revendication précédente, comprenant une affectation d'auto-apprentissage selon l'étape b), dans lequel la fréquence propre corrigée pour une fréquence dominante est enregistrée en tant que valeur de correction et l'affectation, de préférence le tableau d'affectation, est corrigée sur la base d'un nombre statistiquement pertinent de valeurs de correction.

**Figur 1:**

**Figur 2:**

**Figur 3:**

**Figur 4:**

**Figur 5:**

**Figur 6:**

23

**Figur 7:**

21  25

25 21

**Figur 8:**

**Figur 9:**

**Figur 10:**

**Figur 11:**

**Figur 12:**

**Figur 13:**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20160197261 A